# EUROPÄISCHE PATENTSCHRIFT

(11) **EP 2 271 100 B1**
(45) Veröffentlichungstag und Bekanntmachung des Hinweises auf die Patenterteilung: **28.02.2018**
(21) Anmeldenummer: 09008539.0
(22) Anmeldetag: 30.06.2009
(51) Int. Cl.: H04N 21/44, H04N 21/4722, H04N 21/658, H04N 21/81, H04N 21/8405, H04N 7/173, H04L 29/06

(54) **Verfahren und Vorrichtung zum Zugriff auf Zusatzinhalte für Multimediainhalte**
Method and device for access to additional content for multimedia content
Procédé et dispositif d'accès à des contenus supplémentaires pour contenus multimédias

(43) Veröffentlichungstag der Anmeldung: 05.01.2011
(73) Patentinhaber: Nokia Solutions and Networks Oy, 02610 Espoo (FI)
(72) Erfinder: Guenther, Christian, 85579 Neubiberg (DE); Rauschenbach, Uwe, 85586 Poing (DE); Renner, Olaf, 80802 München (DE)
(74) Vertreter: Borgström, Markus

(56) Entgegenhaltungen:
- EP-A- 0 982 947
- WO-A-2008/079223
- WO-A-2009/038632
- US-A1- 2006 037 044
- US-A1- 2008 040 768
- US-A1- 2008 092 158

## Beschreibung

Die Erfindung betrifft ein Verfahren und eine Vorrichtung zum Zugriff auf Zusatzinhalte für Multimediainhalte.

Aus der Veröffentlichung WO 2009/038632 A (DISNEY ENTPR INC [US]; WATSON DAVID [US]; FOPEANO STEPHAN [US]; PARR S), 26 März 2009, ist ein Verfahren bekannt zum Führen einer Zuschauerauswahl eines Fernsehinhalts. Gemäß einem Ausführungsbeispiel wird ein geführtes Surfen durch ein geführtes TV System bereitgestellt. An verschiedenen Punkten auf der Zeitachse einer Show kann eine Schnittstelle eine Bildschirmanzeigenuntermenge einer begrenzten Anzahl von Shows für den Zuschauer zur Auswahl bereitstellen, bevor die Show, die der Zuschauer gerade anschaut, endet.

Aus der Veröffentlichung US 2008/092158 A1 (BHATNAGAR AVNEESH [US] ET AL), 17 April 2008, sind Zugriffssysteme und - verfahren für interaktiven Inhalt für Mediainhalt bekannt. Gemäß einem Ausführungsbeispiel stellt ein Inhaltbereitstellungssystem einen erweiterten Inhaltsdatenstrom bereit, welcher Mediainhalt einer ersten Quelle und interaktiven Werbeinhalt von einer zweiten Quelle umfasst.

Gemäß der Veröffentlichung US 2006/037044 A1 (DANIELS JOHN J [US]), 16. Februar 2006, wird ein zeitsequentielles Signal umfassend einen audiovisuellen Inhalt und Hyperlinks empfangen und in einer zeitsequentiellen Art auf einem Anzeigegerät angezeigt. Die Anzeige des zeitsequentiellen Signals wird angehalten, wann immer ein angezeigter Hyperlink ausgewählt wird.

Gemäß der Veröffentlichung EP-A-0 982 947 (SHARP KK [JP]), 1. März 2000, schließt ein System zusätzliche Information zusammen mit einem Videostrom ein, wobei die zusätzliche Information sich auf zumindest einen der Rahmen bezieht. Vorzugsweise bezieht sich die zusätzliche Information auf ein Objekt in dem Rahmen. Die zusätzliche Information wird einem Zuschauer selektiv angeboten näherungsweise zu der Zeit des Empfangs der Rahmen.

Aus der Veröffentlichung WO 2008/079223 A (DISNEY ENTPR INC [US]; PURVIS CHRISTOPHER [US]; RICE KEVIN [US]), 3. Juli 2008, ist ein Verfahren zum Eingeben und Anzeigen von kommentierender Information in Verbindung mit Inhalt bekannt. Hierbei wird die durch einen Nutzer eines Medienverarbeitungsgeräts eingegebene kommentierende Information empfangen. Dann werden Synchronisierungsdaten zur Synchronisierung des Inhalts mit der kommentierenden Information generiert zur Bereitstellung der kommentierenden Information zu einer ersten Zeit. Dann werden die kommentierenden Daten und die Synchronisierungsdaten in einem Speicher gespeichert.

Aus der Veröffentlichung US 2008/040768 A1 (ROBOTHAM ROBERT ELLIOTT [CA]), 14. Februar 2008, ist ein Ansatz bekannt zur Assoziierung von ergänzender Werbeinformation mit Videokodierung. Hierbei wird die Verfügbarkeit von Werbung oder anderer ergänzenden Information einem Zuschauer bereitgestellt innerhalb der Kodierung an Orten, welche zeitmarkiert sind. Auf den Empfang einer Anforderung des Zuschauers für diese Information wird jede Information, welche mit der Zeitmarkierung assoziiert ist, an den Zuschauer ausgegeben.

Fernseh- und Rundfunkprogramme werden zunehmend über eine Mehrzahl von Verteilwegen angeboten. Verbreitete Rundfunkversorgungstechniken nutzen terrestrisches Antennensignal, Kabelnetze, Satellitensysteme sowie Internet Protokoll basierte Netze oder Kommunikationsnetze, wie insbesondere Mobilfunknetze. Aufgrund von Digitalisierung werden höhere Qualität, größere Programmvielfalt, Interaktivität und Individualisierung ermöglicht. Neben Fernsehen und Audioprogrammen werden allgemeiner Multimediadienste unterstützt, die beispielsweise Video auf Anforderung, Audio auf Anforderung, Spiele, Texte, Bilder, Daten und Internetzugriff umfassen können. Bedingt durch größere Bandbreite und größeres Programmangebot werden neben den Multimediainhalten zusätzliche Informationen, beispielsweise Multimediainhalten zugehörige Beschreibungen, Metadaten und andere Informationen zur Verfügung gestellt, die insbesondere eine maschinengestützte Programmauswahl (EPG, ESG) ermöglichen oder weiteres Informationsbedürfnis von Nutzern befriedigen.

Beispielsweise erfolgt bei IPTV (Internet Protokoll Fernsehen) die digitale Übertragung von breitbandigen Anwendungen, wie Fernsehprogrammen und Filmen, über ein digitales Datennetz. Hierzu wird das auch dem Internet zugrunde liegende Internet Protocol (IP) verwendet. Typischerweise wird beim IPTV von einem Telekommunikations-Anbieter einem bestimmten Nutzerkreis, den Abonnenten oder Teilnehmern, ein Programmangebot mit definierter Qualität über ein Breitbandnetz zur Verfügung gestellt. IPTV benötigt i. a. aus technischen Gründen ein geeignetes und vom IPTV Anbieter zugelassenes Endgerät beim Teilnehmer. Das Endgerät empfängt Datenströme über eine Internetanbindung, z.B. eine DSL basierte Anbindung, es teilt diese Datenströme in Teilströme auf (Audio, Video, Daten etc.), dekodiert und liefert i. a. ein Bild- und Audiosignal an eine integrierte oder externe Video-Audio-Ausgabeeinheit. Als Endgeräte stehen insbesondere beispielsweise Set Top Boxen (STB), Fernsehgeräte (TV), Personal Computer (PC), Laptops, Mobilfunkgeräte und mobile Telefone zur Verfügung. Zur Bereitstellung der ein jeweiliges IPTV Angebot betreffenden Multimediadienste sind seitens des Anbieters u. a. Komponenten zur Steuerung, Lastverteilung und Zugangskontrolle, zur Einspeisung von Fernsehprogrammen (TV headend) in das Breitbandnetz, zur Bereitstellung von Video/Audio Inhalten auf Abruf (VoD Server), zur Aufzeichnung von Inhalten (PVRs), zur Übertragung per Streaming und/oder Download, sowie zur Verschlüsselung der zu übertragenden Inhalte vorhanden.

Neben auf einem Festnetz basierten IPTV Netzlösungen gibt es insbesondere für Mobilfunknetze geeignete Netzlösungen für Mobilfernsehen, die typischerweise zum Beispiel von Mobilfunknetzbetreibern angeboten werden. Derartige Netzlösungen benötigen anbieterseitig ähnliche Komponenten, wie bereits vorstehend erwähnt, verwenden jedoch bedingt durch andere Technologie abweichende Konzepte und Standards. Insbesondere sind beispielsweise die Kodierung der Nutzsignale und die Funktionalität der Endgeräte (z.B. Displaygröße, lokale Verarbeitungsleistung, lokaler Speicher, Übertragungsbandbreite) verschieden von den für ein Festnetz eingesetzten IPTV Lösungen.

Die neben den Multimediainhalten bereitgestellten zusätzlichen Informationen werden als Zusatzinhalte auf Basis insbesondere der voran stehend genannten Rundfunkversorgungstechniken bereitgestellt. Zusatzinhalte können mit einem oder mehreren Multimediainhalten verknüpft sein. Zusatzinhalte können beispielsweise mit einem Programmangebot, mit einem Multimediainhalt, mit einem Programmkanal, mit einer Video/Audio-Bibliothek oder mit einem Dienst einer Rundfunk/Fernsehlösung bereitgestellt werden. Zusatzinhalte können Relevanz besitzen für einen gesamten Multimediainhalt oder für Teile des Multimediainhalts, wie beispielsweise eine Szene oder eine Mehrzahl von Szenen. Der Relevanz entsprechend können Zusatzinhalte statisch dauerhaft mit einem Multimediainhalt verfügbar und für eine Ausgabe auf einem Endgerät eines Nutzers abrufbar sein. Zusatzinhalte können ebenfalls mit dem Ausspielfortschritt des Multimediainhalts dynamisch verfügbar und /oder abrufbar sein und auf Anforderung hin am Endgerät des Nutzers ausgegeben werden. Ein Zusatzinhalt kann beispielsweise aufgrund von Navigation in Übersichten verfügbarer Zusatzinhalte oder aufgrund von Kennzeichnungen von Teilen des Multimediainhalts, zum Beispiel einer Kennzeichnung von bewegten Objekten des Multimediainhalts, über eine Eingabe an dem Endgerät des Nutzers oder einer zugehörigen Fernbedienungseinheit abgerufen werden.

Ein Angebot eines Zusatzinhalts und der Zusatzinhalt sind damit verknüpft mit mindestens einem Multimediainhalt und werden beispielsweise zusammen mit dem Multimediainhalt innerhalb eines gemeinsamen oder eines assoziierten Multiplexstromes durch einen Anbieter bereitgestellt. Hierbei ist es nachteilig, dass ein Zusatzinhalt des Multimediainhalts hinsichtlich Qualität, Relevanz und Aktualität von dem Anbieter des Multimediainhalts abhängig ist.

Durch gleichzeitige Nutzung beispielsweise einer Rundfunk- / Fernsehlösung und des Internets kann ein Nutzer eine wesentliche größere Auswahl von ihn interessierenden Zusatzinhalten des Multimediainhalts während der Ausgabe des Multimediainhalts selbst auffinden und zur Ausgabe abrufen. Nachteilig hierbei ist jedoch, dass eine wenig komfortable Bedienung u. U. zweier parallel genutzter Endgeräte resultiert. So setzt das zeitnahe Auffinden eines gewünschten Zusatzinhalts ein hohes Maß an Initiative und Geschick des Nutzers voraus. Ebenso ergibt sich u. U. die Notwendigkeit der Koordination der Ausgabe des Multimediainhalts während des Auffindens, des Abrufs und der Ausgabe eines gewünschten Zusatzinhalts.

Der Erfindung liegt daher die **Aufgabe** zugrunde, den Zugriff auf Zusatzinhalte von Multimediainhalten im Hinblick auf einfache Bedienbarkeit und flexible Bereitstellung von Zusatzinhalten zu verbessern.

Die Aufgabe wird hinsichtlich des Verfahrens durch die Maßnahmen des Patentanspruchs 1 und hinsichtlich der Vorrichtung durch die Merkmale des Patentanspruchs 14 gelöst.

Weiterbildungen der Erfindung ergeben sich auch aus den abhängigen Ansprüchen.

Zur Lösung der Aufgabe wird ein Verfahren zum Zugriff auf Zusatzinhalte für Multimediainhalte angegeben,
- bei dem ein Beginn einer Ausgabe eines Multimediainhalts erkannt wird;
- bei dem der Multimediainhalt, eine erste Ausgabeposition des Multimediainhalts und eine Art der Ausgabe des Multimediainhalts ermittelt werden;
- bei dem in Abhängigkeit von dem Multimediainhalt, der ersten Ausgabeposition des Multimediainhalts und der Art der Ausgabe des Multimediainhalts ein Angebot eines mindestens einen Zusatzinhalts bereitgestellt wird;
- bei dem eine Anforderung des mindestens einen Zusatzinhalts erkannt wird;
- bei dem der mindestens eine Zusatzinhalt aufgrund der Anforderung des mindestens einen Zusatzinhalts bereitgestellt wird; und
- bei dem in Abhängigkeit von der Anforderung des mindestens einen Zusatzinhalts eine zweite Ausgabeposition des Multimediainhalts ermittelt wird.

Hiermit ist der Vorteil verbunden, dass beispielsweise in Abhängigkeit von der Ausgabe des Multimediainhalts über ein erstes Gerät, insbesondere über ein erstes Endgerät, in Abhängigkeit von dem für den Multimediainhalt erreichten Ausgabefortschritt und in Abhängigkeit von der Ausgabegeschwindigkeit ein dynamisches, zur Ausgabe des Multimediainhalts synchrones Angebot von Zusatzinhalten von einem weiteren Gerät zur Verfügung gestellt werden kann.

Insbesondere kann dieses weitere Gerät von einem Anbieter von Zusatzinhalten genutzt werden, welcher verschieden ist von einem Anbieter des Multimediainhalts. Hiermit ergibt sich gegenüber dem Fall einer ausschließlichen Verfügbarkeit von Zusatzinhalten für den Multimediainhalt von dem Anbieter des Multimediainhalts der Vorteil einer Verfügbarkeit eines unabhängigen, konkurrierenden Angebots von Zusatzinhalten für den Multimediainhalt zur Auswahl durch einen Nutzer. Auch ergibt sich hiermit der weitere Vorteil, dass Aktualität und Vielfalt der dem Nutzer angebotenen Zusatzinhalte des Multimediainhalts gesteigert werden können.

Ein weiterer Vorteil besteht darin, dass in Abhängigkeit von der Anforderung des Zusatzinhalts eine zweite Ausgabeposition des Multimediainhalts ermittelt wird. Diese ist beispielsweise geeignet, eine Ausgabe des Multimediainhalts nach erfolgter Bereitstellung des Zusatzinhalts fortzusetzen oder zu wiederholen. Hierbei kann die zweite Ausgabeposition im Hinblick auf Bedürfnisse des Nutzers in geeigneter Weise ermittelt werden. Ist der Multimediainhalt beispielsweise ein auf Anforderung dem Nutzer bereitgestelltes Video, welches in einer Szene eine Handlung auf einem Hochhaus in Manhatten zeigt, so könnte das Angebot des mindestens einen Zusatzinhalts ein Video eines Hubschrauberflugs über Manhatten umfassen. Fordert der Nutzer diesen Zusatzinhalt an, so kann die zweite Ausgabeposition beispielsweise ermittelt werden als ein Szenenanfang der Handlung auf dem Hochhaus in Manhatten. Damit steht dem Nutzer nach Beendigung oder nach Abbruch einer Bereitstellung des mindestens einen Zusatzinhalts die Option eines Fortsetzens oder eines Wiederholens des Multimediainhalts ab dem Szenenbeginn der Handlung auf dem Hochhaus in Manhatten zur Verfügung. Das Fortsetzen oder Wiederholen des Multimediainhalts kann hierbei auf Anforderung des Nutzers oder automatisch erfolgen. Eine Weiterverfolgung der Handlung des Multimediainhalts wird hiermit vorteilhaft erleichtert und der Nutzungskomfort beim Ende eines Zugriffs auf den mindestens einen Zusatzinhalt gesteigert.

Der Multimediainhalt und der Zusatzinhalt des Multimediainhalts können jeweils z.B. ein Fernsehprogramm, ein Video auf Anforderung, eine Hörfunksendung, ein Audio auf Anforderung, ein elektronisches Spiel oder ein elektronisches Buch sein. Ein Multimediainhalt kann ebenso beispielsweise einen auf Anforderung eines Teilnehmers abrufbaren multimedialen Inhalt, einen Spielfilm, einen Video Clip, eine Video-Botschaft, eine Sprachnachricht, eine Aufzeichnung eines Fernseh- oder Hörfunkprogramms, einen vollständigen oder teilweisen Mitschnitt eines Fernseh- oder Hörfunkprogramms, einen Audio-Inhalt, eine Internetseite, eine Walled Garden Seite, Bildmaterial, Tonmaterial, ein festes Bild, ein bewegtes Bild, ein Live Signal eines Fernseh- oder Hörfunkprogramms, eine Verknüpfung zu einem der vorstehenden Inhalte, eine beliebige Kombination der vorstehenden Inhalte oder eine beliebige Kombination der vorstehenden Inhalte mit weiteren Inhalten umfassen.

Der Beginn der Ausgabe des Multimediainhalts kann hierbei aktuell oder zeitnah zu dem Zeitpunkt, an welchem er erkannt wird, erfolgen. Beispielsweise kann der Beginn der Ausgabe des Multimediainhalts gegeben sein durch ein Einschalten eines Fernsehprogramms, einen Wechsel zu einem Fernseh- oder Hörfunkkanal, ein Einschalten eines Ausgabegeräts / Endgeräts, eine Ausgabe oder eine Fortsetzung der Ausgabe eines auf Abruf verfügbaren Videos, eine Veränderung der Ausgabegeschwindigkeit des Multimediainhalts (z. B. Zeitlupen-Ausgabe, schneller Vorlauf, Standbildausgabe), eine Veränderung einer Ausgaberichtung des Multimediainhalts (z. B. schneller oder langsamer Rücklauf). Der Beginn der Ausgabe des Multimediainhalts kann aber ebenso in der Vergangenheit liegen, falls zum Beispiel die Erkennung des Beginns der Ausgabe des Multimediainhalts wegen Überlast beispielsweise eines Netzes oder eines Netzelementes nicht zeitnah erfolgen konnte oder ein Dienst zur Ausgabe von Zusatzinhalten erst während einer aktuellen Ausgabe des Multimediainhalts angefordert wurde.

Der Beginn der Ausgabe des Multimediainhalts kann durch Abfrage eines Endgeräts, beispielsweise eines TV Gerätes oder einer Set Top Box erkannt werden oder durch Abfrage eines den Multimediainhalt bereitstellenden Gerätes, beispielsweise einer TV Kopfstelle (TV headend), welche ein Fernsehprogramm in Realzeit in ein Netz einspeist, eines VoD Servers, eines PVR Servers oder eines Streaming Servers. Ebenso kann der Beginn der Ausgabe des Multimediainhalts von einem der genannten Geräte gemeldet werden.

Die Art der Ausgabe des Multimediainhalts kann hierbei bestimmt sein durch Ausgabe von Bild und Ton in originaler Ausgabegeschwindigkeit oder beispielsweise durch Ausgabe von Bild und Ton nach Aktivierung einer Trickplay Funktion. Insbesondere kann die Art der Ausgabe des Multimediainhalts eine Ausgabegeschwindigkeit, also beispielsweise eine langsame oder schnelle Ausgabe, eine Ausgaberichtung, also beispielsweise ein Ausgabe vorwärts oder rückwärts, einen Ausgabetyp, also beispielsweise eine Ausgabe ohne Bild oder Videoanteil, ohne Ton oder Audioanteil, im Standbildmodus, mit oder ohne Untertiteln, eine Ausgabequalität, beispielsweise eine Ausgabe in HD oder SD Qualität betreffen oder eine Kombination insbesondere der genannten Ausgabearten.

Das Angebot des mindestens einen Zusatzinhalts für den Multimediainhalt kann mit dem Multimediainhalt, beispielsweise im gleichen Multiplexstrom oder separat von dem Multimediainhalt bereitgestellt werden.

Eine Weiterbildung ist es, dass eine Zeit und/oder ein Ort erfasst werden und dass das Angebot des mindestens einen Zusatzinhalts in Abhängigkeit von der Zeit und/oder dem Ort bereitgestellt wird.

Hierbei kann die Zeit einen Zeitpunkt und/oder eine Zeitdauer umfassen. Beispielsweise kann der Zeitpunkt eine aktuelle Ortszeit, der Zeitpunkt des Beginns der Ausgabe des Multimediainhalts oder der Zeitpunkt sein, an dem der Beginn der Ausgabe des Multimediainhalts erkannt wird. Die Zeitdauer kann beispielsweise ein absolutes Zeitintervall, eine Stunde, eine Minute, ein Tag, eine Monat, ein Jahr im Bezug auf eine Ortszeit sein. Ebenso kann die Zeitdauer eine relative Zeit sein, wie zum Beispiel die Zeit seit dem Beginn einer Fernsehsendung, die Zeit seit dem Beginn der Ausgabe eines auf Anforderung verfügbaren Videos. Ebenso kann der Ort beispielsweise einen geographischen Punkt oder ein geographisches Gebiet oder eine Mehrzahl geographischer Gebiete umfassen.

Hiermit ist der Vorteil verbunden, dass das Angebot des mindestens einen Zusatzinhalts beispielsweise abhängig sein kann von der Tageszeit am Ort des Endgeräts eines Nutzers. Zusatzinhalte, die sich beispielsweise eher für den späten Abend oder eine bestimmte Tageszeit eignen, können hierdurch vorteilhaft passend angeboten werden.

Hiermit ist der weitere Vorteil verbunden, dass nach dem Beginn der Ausgabe des Multimediainhalts zeitlich wechselnde mit dem Ausspielfortschritt des Multimediainhalts assoziierte Zusatzinhalte angeboten werden. Beginnt beispielsweise zu einem ersten Zeitpunkt eine Szene, für welche ein erster Zusatzinhalt relevant ist, und endet diese Szene zu einem zweiten Zeitpunkt, so kann das Angebot des mindestens einen Zusatzinhalts beispielsweise den ersten Zusatzinhalt umfassen für die Zeitdauer von dem ersten Zeitpunkt bis zu dem zweiten Zeitpunkt, bis zu dem um einen festen Zeitwert vergrößerten zweiten Zeitpunkt oder bis zum Ende einer Folgeszene.

Auch kann das Angebot des mindestens einen Zusatzinhalts vorteilhaft beispielsweise orientiert werden kann am Aufenthaltsort eines Nutzers oder an einem einen Nutzer individuell interessierenden geographischen Gebiet. So kann eine als Zusatzinhalt verfügbare Wettervorhersage für Süddeutschland insbesondere für Endgeräte als Zusatzinhalt angeboten werden, die sich in Süddeutschland befinden. Ebenso kann das Angebot des mindestens einen Zusatzinhalts beispielsweise an dem Geschehen in einem fernen Land ausgerichtet sein, wodurch beispielsweise in dem Angebot des mindestens einen Zusatzinhalts vorteilhaft individuelle Interessen von Reisenden oder Migranten / Fremdarbeitern berücksichtigt werden können.

Eine weitere Ausführungsform ist es, dass das Angebot des mindestens einen Zusatzinhalts zu einem Zeitpunkt und für eine Zeitdauer bereitgestellt wird, wobei der Zeitpunkt und/oder die Zeitdauer von mindestens einem der folgenden Gegenstände abhängig ist:
- dem Multimediainhalt
- der ersten Ausgabeposition des Multimediainhalts
- der Art der Ausgabe des Multimediainhalts
- dem mindestens einen Zusatzinhalt

Hiermit ist der Vorteil verbunden, dass der Zusatzinhalt beispielsweise schritthaltend mit der Ausgabe des Multimediainhalts und entsprechend der Ausgabegeschwindigkeit des Multimediainhalts angeboten wird. Ebenso ist es ein Vorteil, dass das Angebot des mindestens einen Zusatzinhalts abhängig von dem Zusatzinhalt selbst sein kann. So kann ein Zusatzinhalt von besonderer oder übergeordneter Wichtigkeit, wie beispielsweise Wahlergebnisse oder Katastrophenwarnungen, im Vergleich zu anderen Zusatzinhalten länger oder permanent als Zusatzinhalt angeboten werden. Auch können Werbeinhalte als Zusatzinhalte zu einer geeigneten Zeit und mit geeigneter Zeitdauer vorteilhaft angeboten werden.

Eine Ausgestaltung ist es, dass eine Speicherung der zweiten Ausgabeposition des Multimediainhalts durchgeführt wird.

Dies ermöglicht beispielsweise eine Fortsetzung der Ausgabe des Multimediainhalts, nachdem der mindestens eine Zusatzinhalt vollständig bereitgestellt wurde oder wenn es nicht mehr erforderlich ist, dass der mindestens eine Zusatzinhalt weiter ausgegeben wird. Die Speicherung der zweiten Ausgabeposition kann hierbei in einem Endgerät des Nutzers erfolgen und /oder in einem den Multimediainhalt bereitstellenden Gerät, wie zum Beispiel einer TV Kopfstelle, welche ein Fernsehprogramm in Realzeit in ein Netz einspeist, einem VoD Server, einem PVR Server oder einem Streaming Server. Ebenso kann die Speicherung alternativ oder zusätzlich in einem weiteren Gerät, insbesondere einem Server zur Bereitstellung oder zur Steuerung der Bereitstellung von Zusatzinhalten für Multimediainhalte erfolgen.

Eine weitere Ausführungsform besteht darin, dass eine Aufzeichnung des Multimediainhalts ab der zweiten Ausgabeposition des Multimediainhalts angefordert wird.

Hiermit ist der Vorteil verbunden, dass ein in Realzeit zur Verfügung gestelltes Fernseh- oder Hörfunkprogramm beispielsweise insbesondere ab dem Zeitpunkt aufgezeichnet wird, ab dem der mindestens eine Zusatzinhalt bereitgestellt wird und danach zeitversetzt ausgegeben werden kann. Die Aufzeichnung kann hierbei durch eine lokale Aufzeichnungsfunktion eines Endgeräts, beispielsweise einer mit einer PVR Funktion ausgerüsteten Set Top Box, erfolgen. Ebenso kann eine Aufzeichnung durch eine netzbasierte PVR Funktion außerhalb eines Endgeräts erfolgen. Wurde das in Realzeit zur Verfügung gestellte Fernseh- oder Hörfunkprogramm bereits aus anderen Gründen vor dem Zeitpunkt der Anforderung des mindestens einen Zusatzinhalts aufgezeichnet, so kann die zweite Ausgabeposition insbesondere auch im Falle des in Realzeit zur Verfügung gestellten Fernseh- oder Hörfunkprogramms vor dem Zeitpunkt liegen, zu dem der mindestens eine Zusatzinhalt angefordert wird. Letzteres ist vorteilhaft im Hinblick darauf, dass eine Fortsetzung der Ausgabe eines Multimediainhalts nach einer Unterbrechung bereits vor dem Zeitpunkt der Unterbrechung einsetzen sollte, um dem Nutzer eine möglichst angenehme und verlustfreie Verfolgung des Multimediainhalts nach erfolgter Bereitstellung des mindestens einen Zuatzinhaltes zu ermöglichen.

Eine Weiterbildung besteht darin, dass eine Aufzeichnung des Multimediainhalts in Abhängigkeit von dem Multimediainhalt und/oder dem Zusatzinhalt angefordert wird.

Hiermit ist der Vorteil verbunden, dass eine Aufzeichnung nur dann vorgenommen werden kann, wenn sie notwendig ist, womit der Ressourcenbedarf, beispielsweise der Speicherplatzbedarf gering gehalten wird. Ist der Multimediainhalt beispielsweise ein Video auf Anforderung, so ist eine Aufzeichnung entbehrlich, da eine solche mit dem Video bereits vorliegt. Besteht der mindestens eine Zusatzinhalt nur aus einem übersichtlichen Wortbeitrag, so kann dieser zusätzlich zum Multimediainhalt wahrgenommen und verstanden werden, so dass eine Aufzeichnung des Multimediainhalts ebenfalls nicht erforderlich ist und entfallen kann. Ist der Multimediainhalt ein statischer Inhalt, beispielsweise ein Bild, eine Tabelle, ein Text, so kann eine Aufzeichnung bei Zugriff auf den mindestens einen Zusatzinhalt ebenfalls entfallen.

Eine weitere Ausführungsform ist es, dass die Ausgabe des Multimediainhalts durch ein erstes Endgerät erfolgt und das Angebot des mindestens einen Zusatzinhalts durch das erste Endgerät und/oder ein zweites Endgerät ausgegeben wird. Hiermit ist der Vorteil verbunden, dass bei Verfügbarkeit zweier Endgeräte gleichzeitig sowohl der Multimediainhalt über das erste Endgerät ausgegeben werden kann als auch das Angebot des mindestens einen Zusatzinhalts des Multimediainhalts über das zweite Endgerät ausgegeben werden kann. Einschränkungen des Ausgabeformats und/oder der Ausgabequalität, wie sie beispielsweise durch Ausgaben in zusätzlichen Fenstern oder durch Overlay Ausgaben oder sequentielle Ausgaben des Angebots des mindestens einen Zusatzinhalts über das erste Endgerät entstehen, können hierdurch vermieden werden.

Steht dagegen nur das erste Endgerät zur Verfügung, kann dieses dennoch vorteilhaft zur Ausgabe des Multimediainhalts und zur Ausgabe des Angebots des mindestens einen Zusatzinhalts genutzt werden. Die Ausgabe des Multimediainhalts und die Ausgabe des Angebots des mindestens einen Zusatzinhalts können dann beispielsweise durch sich automatisch öffnende und schließende geeignete Fenster oder Overlays gleichzeitig erfolgen.

Das erste und das zweite Endgerät kann jeweils beispielsweise eine Set Top Box (STB), ein Fernsehgerät (TV), ein Rundfunkempfänger, ein Festnetztelefon, ein Personal Computer (PC), ein Lap-top, ein PDA, und Mobilfunkgerät, insbesondere ein mobiles Telefon sein. Insbesondere kann das erste Endgerät beispielsweise ein für hochauflösendes Fernsehen besonders geeignetes Endgerät sein. Dies kann dadurch bedingt sein, dass es eine für hochauflösendes Fernsehen geeignete Ausgabeeinheit besitzt. Eine solche Ausgabeeinheit kann in dem ersten Endgerät integriert oder eine externe, an das erste Endgerät angeschlossene Ausgabeeinheit sein. Insbesondere kann das zweite Endgerät ein PC oder Mobilfunkgerät sein, wodurch sich Vorteile hinsichtlich einfacher Bedienung oder Handlichkeit ergeben.

Auch kann die Art der Bereitstellung des Angebots des mindestens einen Zusatzinhalts von dem Typ des ersten und oder zweiten Endgeräts abhängig sein. So kann das Angebot des mindestens einen Zusatzinhalts über das erste Endgerät abhängig von dem Typ des ersten Endgeräts in einer verkürzten Form ausgegeben werden, beispielsweise als Übersicht oder in Schlagwortform. Über das zweite Endgerät kann das Angebot abhängig von dem Typ des zweiten Endgeräts oder abhängig von dem Typ des ersten Endgeräts und dem Typ des zweiten Endgeräts in ausführlicher Form ausgegeben werden.

Ebenso ist es eine Weiterbildung, dass die Ausgabe des Multimediainhalts durch ein erstes Endgerät erfolgt und der mindestens eine Zusatzinhalt von dem ersten Endgerät oder von einem zweiten Endgerät angefordert wird.

Hiermit ist der Vorteil verbunden, dass bei Verfügbarkeit zweier Endgeräte der mindestens eine Zusatzinhalts des Multimediainhalts sowohl über eine Bedieneinheit des ersten Endgeräts als auch über eine Bedieneinheit des zweiten Endgeräts angefordert werden kann.

Auch ist es eine Weiterbildung, dass die Ausgabe des Multimediainhalts durch ein erstes Endgerät erfolgt und der mindestens eine Zusatzinhalt für das erste Endgerät und/oder ein zweites Endgerät bereitgestellt wird.

Hierdurch ist es möglich, dass bei Verfügbarkeit zweier Endgeräte gleichzeitig sowohl der Multimediainhalt über das erste Endgerät ausgegeben werden kann als auch der angeforderte mindestens eine Zusatzinhalt des Multimediainhalts über das zweite Endgerät ausgegeben werden kann. Dies ist beispielsweise dann vorteilhaft, wenn es dem Nutzer möglich ist, den mindestens einen Zusatzinhalt neben dem Multimediainhalt zu verfolgen. Dies kann beispielsweise dann der Fall sein, wenn der Audioanteil des Multimediainhalts wichtiger ist als der Videoanteil des Multimediainhalts, und der mindestens eine Zusatzinhalt ein rein visueller Multimediainhalt ist. Ebenso kann dies beispielsweise der Fall sein, wenn der Videoanteil des Multimediainhalts wichtiger ist als der Audioanteil des Multimediainhalts, und der mindestens eine Zusatzinhalt keinen Videoanteil besitzt. So kann zum Beispiel eine Fernsehübertragung eines Konzerts vorteilhaft über das erste Endgerät ausgegeben werden, während ein schriftliches Konzertprogramm über das zweite Endgerät ausgegeben wird.

Steht dagegen nur das erste Endgerät zur Verfügung, kann dieses dennoch vorteilhaft zur Ausgabe des Multimediainhalts und zur Ausgabe des mindestens einen Zusatzinhalts genutzt werden. Die Ausgabe des Multimediainhalts und die Ausgabe des mindestens einen Zusatzinhalts können dann beispielsweise durch sich automatisch öffnende und schließende geeignete Fenster oder Overlays gleichzeitig erfolgen.

Eine andere Weiterbildung ist es, dass die zweite Ausgabeposition des Multimediainhalts assoziiert ist mit der Zeit, zu welcher der mindestens eine Zusatzinhalt bereitgestellt wird.

Damit ist die zweite Ausgabeposition des Multimediainhalts verknüpft mit dem Zeitpunkt des Beginns einer Bereitstellung des mindestens einen Zusatzinhalts. Somit kann vorteilhaft vermieden werden, dass die Ausgabe des Multimediainhalts nach der Anforderung des mindestens einen Zusatzinhalts beispielsweise unterbrochen wird, bevor der mindestens eine Zusatzinhalt zur Ausgabe bereitsteht. Dies ist insbesondere dann vorteilhaft, wenn die Zeitdifferenz zwischen dem Zeitpunkt der Anforderung des mindestens einen Zusatzinhalts und dem Zeitpunkt des Beginns der Bereitstellung des mindestens einen Zusatzinhalts in der Größenordnung einiger Sekunden liegt oder größer ist und für den Nutzer deutlich wahrnehmbar ist. Ebenso kann auch in diesem Falle vorteilhaft vermieden werden, dass nach Ende oder Abbruch der Bereitstellung des mindestens einen Zusatzinhalts eine Fortsetzung der Ausgabe oder eine zeitversetzte Ausgabe des Multimediainhalts erheblich vor dem Beginn der Bereitstellung des mindestens einen Zusatzinhalts einsetzt und der Nutzer beispielsweise eine Vielzahl von Szenen ausgegeben bekommt, die er schon vollständig verfolgen konnte.

Eine andere Weiterbildung ist es, dass eine Modifikation der Ausgabe des Multimediainhalts ab der zweiten Ausgabeposition angefordert wird.

In Abhängigkeit von dem Multimediainhalt und dem angeforderten mindestens einen Zusatzinhalt kann eine alternative Ausgabe des Multimediainhalts und des mindestens einen Zusatzinhalts erfolgen oder eine gleichzeitige Ausgabe des Multimediainhalts und des mindestens einen Zusatzinhalts. Im Falle der gleichzeitigen Ausgabe des Multimediainhalts und des mindestens einen Zusatzinhalts kann die Ausgabe des Multimediainhalts hinsichtlich Bild-, Ton- und Textinformation des Multimediainhalts modifiziert werden. Die Modifikation der Ausgabe des Multimediainhalts kann hinsichtlich Bildinformation und/oder Toninformation und/oder Textinformation des Multimediainhalts erfolgen. Die Modifikation der Ausgabe des Multimediainhalts kann in Abhängigkeit von dem Multimediainhalt und/oder dem angeforderten mindestens einen Zusatzinhalt erfolgen.

Hiermit ist der Vorteil verbunden, dass eine gleichzeitige Ausgabe des Multimediainhalts und des mindestens einen Zusatzinhalts in Abhängigkeit von dem Multimediainhalt und dem mindestens einen Zusatzinhalt optimal gestaltet werden kann. Besitzt der Multimediainhalt beispielsweise eine geringe Anzahl von Szenenwechseln und nur geringe Sprachanteile und besitzt der mindestens eine Zusatzinhalt Audio- und Videoanteil, so kann eine gleichzeitige Ausgabe des Multimediainhalts und des mindestens einen Zusatzinhalts vorteilhaft dadurch erfolgen, dass die Lautstärke der Ausgabe des Multimediainhalts für die Dauer der Ausgabe des mindestens einen Zusatzinhalts reduziert wird.

Eine weitere Ausführungsform ist es, dass eine Unterbrechung der Ausgabe des Multimediainhalts ab der zweiten Ausgabeposition angefordert wird.

Eine weitere Ausführungsform ist es, dass die Ausgabe des Multimediainhalts ab der zweiten Ausgabeposition in hinsichtlich Bild- und/oder Tonausgabe veränderter Form angefordert wird.

Eine weitere Ausführungsform ist es, dass angefordert wird, dass ab der zweiten Ausgabeposition eine Bildausgabe des Multimediainhalts teilweise vorgenommen wird, hinsichtlich der Bildfläche verändert wird und/oder um Untertitel ergänzt wird.

Eine weitere Ausführungsform ist es, dass angefordert wird, dass ab der zweiten Ausgabeposition eine Tonausgabe des Multimediainhalts (C) hinsichtlich der Lautstärke verändert wird oder stumm geschaltet wird.

Die beiden letztgenannten Ausführungsformen ermöglichen beispielsweise vorteilhaft eine gleichzeitige Ausgabe des Multimediainhalts und des mindestens einen Zusatzinhalts, falls der mindestens eine Zusatzinhalt keinen visuellen Anteil besitzt und der Multimediainhalt Untertitel umfasst. In diesem Falle kann während der Ausgabe des mindestens einen Zusatzinhalts der Multimediainhalt ohne Ton und mit Untertitelausgabe angefordert und ausgegeben werden.

Eine weitere Weiterbildung ist es, dass eine Ausgabe des Multimediainhalts ab der zweiten Ausgabeposition angefordert wird, falls erkannt wird, dass der mindestens eine Zusatzinhalt nicht mehr bereitgestellt wird oder eine Ausgabe des mindestens einen Zusatzinhalts nicht mehr erforderlich ist.

Hiermit ergibt sich der Vorteil, dass die Ausgabe des Multimediainhalts ab der zweiten Ausgabeposition automatisch erfolgt, falls der mindestens eine Zusatzinhalt vollständig bereitgestellt wurde oder die Ausgabe des mindestens einen Zusatzinhalts abgebrochen wurde. Hierbei kann die Ausgabe des mindestens einen Zusatzinhalts insbesondere durch Anforderung des ersten oder des zweiten Endgeräts nach entsprechenden Eingaben des Nutzers abgebrochen werden. Eine Ausgabe eines auf Anforderung verfügbaren Videos, die mit Bereitstellung des mindestens einen Zusatzinhalts unterbrochen wurde, kann so an der zweiten Ausgabeposition, z. B. szenengerecht, automatisch fortgesetzt werden. Eine Ausgabe eines Fernsehprogramms, welches mit Bereitstellung des mindestens einen Zusatzinhalts unterbrochen und aufgezeichnet wurde, kann so an der zweiten Ausgabeposition ebenfalls automatisch zeitversetzt fortgesetzt werden.

Eine weitere Ausführungsform ist es, dass das Angebot des mindestens einen Zusatzinhalts von einem Server bereitgestellt wird und der mindestens eine Zusatzinhalt von dem Server bereitgestellt wird oder von einem weiteren Server angefordert wird.

Hiermit ergibt sich der Vorteil, dass des Angebot des mindestens einen Zusatzinhalts des Multimediainhalts und der angeforderte mindestens eine Zusatzinhalt des Multimediainhalts in einfacher Weise durch einen Server eines von dem Anbieter des Multimediainhalts und von dem Anbieter der Netzlösung unabhängigen Anbieters von Zusatzinhalten bereitgestellt werden können.

Ebenso ist es im Hinblick auf Kosten und Performanz vorteilhaft, dass der mindestens eine Zusatzinhalt auch von dem weiteren Server, z. B. einem für Streaming von Zusatzinhalten oder Internetzugriff optimierten weiteren Server angefordert werden kann.

Eine weitere Ausführungsform ist es, dass eine statistische Bewertung der Anforderung des mindestens einen Zusatzinhalts und/oder einer Ausgabedauer des mindestens einen Zusatzinhalts durchgeführt wird.

Die statistische Bewertung kann hierbei über alle Anforderungen des mindestens einen Zusatzinhalts erfolgen, über Anforderungen des mindestens einen Zusatzinhalts einer Nutzergruppe oder einer Mehrzahl von Endgeräten oder über Anforderungen des mindestens einen Zusatzinhalts eines einzelnen Nutzers oder eines einzelnen Endgeräts.

Hiermit ist der Vorteil verbunden, dass die statistische Bewertung zur Festlegung des Angebots des mindestens einen Zusatzinhalts dienen kann. Insbesondere können wenig nachgefragte Zusatzinhalte nicht weiter in dem Angebot des mindestens einen Zusatzinhalts enthalten sein. In der Vergangenheit wenig nachgefragte Zusatzinhalte können somit in dem Angebot des mindestens einen Zusatzinhalts aufgrund von statischen Auswertungen unberücksichtigt bleiben oder ausgeblendet werden. Ebenso können in der Vergangenheit stark nachgefragte Zusatzinhalte in audiovisuell exponierter Weise, beispielsweise auf vorderen Plätzen einer Prioritätsliste, in dem Angebot des mindestens einen Zusatzinhalts enthalten sein.

Eine weitere Ausführungsform ist es, dass
- eine Identifizierung eines weiteren Zusatzinhalts erkannt wird;
- mindestens eine dritte Ausgabeposition des Multimediainhalts für den weiteren Zusatzinhalt ermittelt wird; und
- bei dem der weitere Zusatzinhalt in ein zukünftiges Angebot eines mindestens einen Zusatzinhalts für den Multimediainhalt aufgenommen wird.

Hiermit ist der Vorteil gegeben, dass der Nutzer den weiteren Zusatzinhalt zur Aufnahme in das zukünftige Angebot des mindestens einen Zusatzinhalts für den Multimediainhalt einbringen oder vorschlagen kann. Hierzu wird eine Identifizierung des weiteren Zusatzinhalts bereitgestellt und erkannt. Die Identifizierung des Zusatzinhalts kann beispielsweise eine Internet-Adresse sein, unter der ein Video auf Abruf zur Verfügung steht. Ferner wird die dritte Ausgabeposition des Multimediainhalts ermittelt, ab welcher der weitere Zusatzinhalt relevant ist. Die dritte Ausgabeposition des Multimediainhalts kann hierbei von dem Nutzer beispielsweise als relative Zeit bezogen auf den Anfang des Multimediainhalts bereitgestellt werden oder automatisch durch Suchalgorithmen bestimmt werden. Der Name des Multimediainhalts kann hierbei von dem Nutzer bereitgestellt werden oder automatisch bestimmt werden, beispielsweise als der aktuell in Ausgabe befindliche Multimediainhalt. Vor Aufnahme des weiteren Zusatzinhalts in das zukünftige Angebot des mindestens einen Zusatzinhalts für den Multimediainhalt können automatische Prüfungen durchgeführt werden. So kann beispielsweise geprüft werden, dass der der weitere Zusatzinhalt zugreifbar ist und keinen bedenklichen Inhalt besitzt. Letzteres kann über Adresslisten, Text-, Sprach- und/oder Bilderkennung sowie über Metadaten des weiteren Zusatzinhalts erfolgen.

Hierbei kann die Identifizierung des weiteren Zusatzinhalts beispielsweise ein Verweis auf den weiteren Zusatzinhalt sein, ein Name des weiteren Zusatzinhalts, eine physikalische oder symbolische Adresse des weiteren Zusatzinhalts oder jede andere Identifizierung, die den weiteren Zusatzinhalt eindeutig bestimmt.

Mit Hilfe der beiden letztgenannten Ausführungsformen kann das Angebot des mindestens einen Zusatzinhalts des Multimediainhalts vorteilhaft automatisch aktuell gehalten werden. Dies kann erfolgen, indem ein wenig nachgefragter Zusatzinhalt aus dem Angebot des mindestens einen Zusatzinhalts durch die statistische Bewertung erkannt wird und in das zukünftigen Angebot des mindestens einen Zusatzinhalts nicht aufgenommen wird und indem der weitere Zusatzinhalt in das zukünftigen Angebot des mindestens einen Zusatzinhalts aufgenommen wird.

Zur Lösung der Aufgabe wird eine Vorrichtung zum Zugriff auf Zusatzinhalte für Multimediainhalte angegeben mit
- einer ersten Einheit, die einen Beginn einer Ausgabe eines Multimediainhalts erkennt und die den Multimediainhalt, eine erste Ausgabeposition des Multimediainhalts und eine Art der Ausgabe des Multimediainhalts ermittelt;
- einer zweiten Einheit, die ein Angebot eines mindestens einen Zusatzinhalts in Abhängigkeit von dem Multimediainhalt, der ersten Ausgabeposition des Multimediainhalts und der Art der Ausgabe des Multimediainhalts bereitstellt und die eine Anforderung des mindestens einen Zusatzinhalts erkennt;
- einer dritten Einheit, die in Abhängigkeit von der Anforderung des mindestens einen Zusatzinhalts eine zweite Ausgabeposition des Multimediainhalts ermittelt.

Hierbei können die erste, die zweite und die dritte Einheit der Vorrichtung in einem einzigen Gerät beispielsweise einem Server eines paketbasierten Netzes oder einem Netzelement des paketbasierten Netzes, oder auf unterschiedlichen Servern und oder Netzelementen des paketbasierten Netzes implementiert sein. Hiermit ergibt sich der Vorteil einer flexiblen Implementierung unter Ausnutzung vorhandener Netzelemente insbesondere eines von dem Anbieter des Multimediainhalts und von dem Anbieter der Netzlösung unabhängigen Anbieters von Zusatzinhalten.

Eine Weiterbildung besteht darin, dass die dritte Einheit den mindestens einen Zusatzinhalt aufgrund der Anforderung des mindestens einen Zusatzinhalts bereitstellt oder anfordert.

Eine weitere Weiterbildung besteht darin, dass die dritte Einheit eine Speicherung der zweiten Ausgabeposition des Multimediainhalts durchführt oder eine Aufzeichnung des Multimediainhalts ab der zweiten Ausgabeposition des Multimediainhalts anfordert.

Eine andere Weiterbildung besteht darin, dass die dritte Einheit eine Modifikation der Ausgabe des Multimediainhalts ab der zweiten Ausgabeposition anfordert.

Eine weitere Ausführungsform besteht darin, dass die dritte Einheit eine Ausgabe des Multimediainhalts ab der zweiten Ausgabeposition anfordert, falls erkannt wird, dass der mindestens eine Zusatzinhalt nicht mehr bereitgestellt wird oder eine Ausgabe des mindestens einen Zusatzinhalts nicht mehr erforderlich ist.

Gemäß einer weiteren Ausführungsform wird die Vorrichtung angeben
- mit einer vierten Einheit, die eine statistische Bewertung der Anforderung des mindestens einen Zusatzinhalts und/oder einer Ausgabedauer des mindestens einen Zusatzinhalts durchführt.
   Gemäß einer weiteren Ausgestaltung wird die Vorrichtung angeben
- mit einer fünften Einheit, die eine Identifizierung eines weiteren Zusatzinhalts erkennt, mindestens eine dritte Ausgabeposition des Multimediainhalts für den weiteren Zusatzinhalt ermittelt und den weiteren Zusatzinhalt in ein zukünftiges Angebot eines mindestens einen Zusatzinhalts für den Multimediainhalt aufnimmt.

Ausführungsbeispiele der Erfindung werden anhand der folgenden Figuren dargestellt:
- Fig.1: zeigt ein Flussdiagramm wesentlicher Verfahrensschritte eines ersten Ausführungsbeispiels;
- Fig.2: zeigt einen ersten Teil eines Flussdiagramms wesentlicher Verfahrensschritte eines zweiten Ausführungsbeispiels für eine Bereitstellung eines Zusatzinhaltsangebots;
- Fig.3: zeigt einen zweiten Teil des Flussdiagramms wesentlicher Verfahrensschritte des zweiten Ausführungsbeispiels für eine Bereitstellung eines Zusatzinhalts;
- Fig.4: zeigt einen dritten Teil des Flussdiagramms wesentlicher Verfahrensschritte des zweiten Ausführungsbeispiels für eine Bereitstellung eines Zusatzinhalts;
- Fig.5: zeigt eine vereinfachte Blockdarstellung eines Ausführungsbeispiels zur Veranschaulichung einer Vorrichtung zum Zugriff auf Zusatzinhalte für Multimediainhalte;
- Fig.6: zeigt eine vereinfachte Blockdarstellung eines Ausführungsbeispiels zur Veranschaulichung einer Bereitstellung eines Zusatzinhalts für einen von einem VoD Server abrufbaren Multimediainhalt;
- Fig.7: zeigt eine vereinfachte Blockdarstellung eines Ausführungsbeispiels zur Veranschaulichung einer Bereitstellung eines Zusatzinhalts für einen von einem VoD Server abrufbaren Multimediainhalt;
- Fig.8: zeigt eine vereinfachte Blockdarstellung eines Ausführungsbeispiels zur Veranschaulichung einer Bereitstellung eines Zusatzinhalts für einen von einem Live TV Server bereitgestellten Multimediainhalt;
- Fig.9: zeigt eine vereinfachte Blockdarstellung eines Ausführungsbeispiels zur veranschaulichung einer Implementierung auf einem Endgerät;

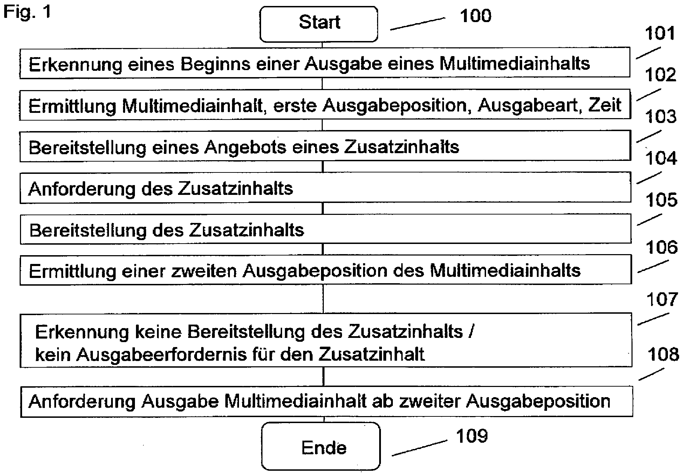

**Fig.1** zeigt ein Flussdiagramm wesentlicher Verfahrensschritte eines ersten Ausführungsbeispiels. Nach einem Start (Schritt 100) erfolgt eine Erkennung eines Beginns einer Ausgabe eines Multimediainhalts in einem Schritt 101. Die Ausgabe des Multimediainhalts kann hierbei über eine in einem ersten Endgerät integrierte Ausgabeeinheit, z. B. ein Display eines mobilen Telefons, erfolgen oder über eine separate Ausgabeeinheit außerhalb des ersten Endgeräts, z. B. ein an eine Set Top Box angeschlossenes Fernsehgerät. Die Erkennung kann durch einen Empfang einer ersten Nachricht von dem ersten Endgerät erfolgen, durch welche das erste Endgerät mitteilt, dass der Beginn der Ausgabe des Multimediainhalts vorliegt oder zu einer Zeit erfolgen wird. Die erste Nachricht kann hierbei beispielsweise durch das erste Endgerät oder durch einen VoD Server als Quittung einer Anfrage oder freilaufend ohne vorherige Anfrage zur Verfügung gestellt werden.

In einem Schritt 102 werden anschließend der über das erste Endgerät ausgegebene Multimediainhalt, eine erste Ausgabeposition des Multimediainhalts im Bezug auf die Ausgabe des Multimediainhalts über das erste Endgerät und eine Art der Ausgabe des Multimediainhalts ermittelt. Diese Daten können bereits aus der ersten Nachricht ermittelbar sein oder zusätzliche Abfragen des ersten Endgeräts und/oder anderer Netzelemente erforderlich machen. Beispielsweise könnte bereits die erste Nachricht den Multimediainhalt durch Angabe des Titels und einer Adresse, einer Bibliothek oder eines Programmkanals vollständig identifizieren. Ebenso könnte bereits die erste Nachricht die erste Ausgabeposition identifizieren, beispielsweise durch Angabe einer relativen Zeit zu dem Anfang des Multimediainhalts, und die Art der Ausgabe umfassen, beispielsweise Ausgabe eines Videos in normaler Ausgabegeschwindigkeit.

In einem Schritt 103 wird daraufhin abhängig von dem Multimediainhalt, der ersten Ausgabeposition des Multimediainhalts und der Art der Ausgabe des Multimediainhalts ein Angebot eines mindestens einen Zusatzinhalts bereitgestellt. Das Angebot kann einem zweiten Endgerät bereitgestellt werden Hierzu kann das Angebot in Form von mindestens einer zweiten Nachricht zu dem zweiten Endgerät übertragen werden. Die mindestens eine zweite Nachricht kann unmittelbar oder auf Abruf durch das zweite Endgerät gesendet werden. Nach Empfang der mindestens einen zweiten Nachricht wird das Angebot über eine Ausgabeeinheit des zweiten Endgeräts ausgegeben. Ein aufgrund des Ausspielfortschritts des Multimediainhalts geändertes Angebot eines mindestens einen Zusatzinhalts wird dem zweiten Endgerät dynamisch mit dem Ausspielfortschritt ebenfalls bereitgestellt. Hierbei kann das geänderte Angebot in Form von mindestens einer weiteren zweiten Nachricht zu dem zweiten Endgerät übertragen werden. Die mindestens eine weitere zweite Nachricht kann unmittelbar oder auf Abruf durch das zweite Endgerät gesendet werden. Nach Empfang der mindestens einen zweiten Nachricht wird das Angebot über eine Ausgabeeinheit des zweiten Endgeräts ausgegeben.

Über eine Eingabeeinheit des zweiten Endgeräts kann ein Nutzer den mindestens einen Zusatzinhalt auswählen. Daraufhin erfolgt eine Anforderung des mindestens einen Zusatzinhalts, welche in einem Schritt 104 erkannt wird. Hierbei fordert das zweite Endgerät den ausgewählten mindestens einen Zusatzinhalt beispielsweise über eine dritte Nachricht an. Die dritte Nachricht wird empfängerseitig ausgewertet. Ist die dritte Nachricht hierbei als Nachricht einer Anforderung des mindestens einen Zusatzinhalts für das zweite Endgerät erkennbar, so ist die Anforderung des mindestens einen Zusatzinhalts erkannt.

In einem Schritt 105 wird dem zweiten Endgerät daraufhin der mindestens eine Zusatzinhalt bereitgestellt. Hierzu kann der mindestens eine Zusatzinhalt in Form von mindestens einer vierten Nachricht zu dem zweiten Endgerät übertragen werden. Die mindestens eine vierte Nachricht kann den mindestens einen Zusatzinhalt zumindest teilweise enthalten oder sie kann Adress- und Zugangsinformation zum Erhalt des mindestens einen Zusatzinhalts umfassen. Mit Empfang des mindestens einen Zusatzinhalts in dem zweiten Endgerät wird der mindestens eine Zusatzinhalt über die Ausgabeeinheit des zweiten Endgeräts ausgegeben.

In einem Schritt 106 wird eine zweite Ausgabeposition des Multimediainhalts ermittelt. Die zweite Ausgabeposition ist abhängig von der Anforderung des mindestens einen Zusatzinhalts und dient der Steuerung der Ausgabe und /oder Bereitstellung des Multimediainhalts nach der Anforderung des mindestens einen Zusatzinhalts durch das zweite Endgerät. Beispielsweise kann die zweite Ausgabeposition ermittelt werden als die Ausgabeposition des Multimediainhalts, die zu dem Zeitpunkt erreicht ist, zu dem die Anforderung des mindestens einen Zusatzinhalts erkannt wird. Die zweite Ausgabeposition kann mittels einer fünften Nachricht dem ersten Endgerät und/oder einem Server, welcher den Multimediainhalt bereitstellt, mitgeteilt werden.

In einem weiteren Schritt 107 wird erkannt, dass keine Bereitstellung des mindestens einen Zusatzinhalts mehr erfolgt oder dass eine Ausgabe des mindestens einen Zusatzinhalts nicht mehr erforderlich ist. So kann der mindestens eine Zusatzinhalt beispielsweise ein Video sein, das per Streaming vollständig zu dem zweiten Endgerät übertragen wurde. Ebenfalls kann der mindestens eine Zusatzinhalt eine Internet-Seite sein, die nicht mehr ausgegeben wird. Dass keine Bereitstellung des mindestens einen Zusatzinhalts mehr erfolgt oder dass kein Erfordernis der Ausgabe des mindestens einen Zusatzinhalts mehr besteht, kann aufgrund einer sechsten Nachricht erkannt werden. Die sechste Nachricht kann von dem zweiten Endgerät bereitgestellt werden. Ebenfalls kann die sechste Nachricht von einem den mindestens einen Zusatzinhalt bereitstellenden oder übertragenden Netzelement oder Server bereitgestellt werden. Hierbei dient die sechste Nachricht zur Information darüber, dass ein Ende des mindestens einen Zusatzinhalts erreicht ist und/oder dass es nicht mehr erforderlich ist, dass der mindestens eine Zusatzinhalt über das zweite Endgerät ausgegeben wird.

In einem weiteren Schritt 108 wird hierauf eine Ausgabe des Multimediainhalts ab der zweiten Ausgabeposition angefordert. Die Ausgabe des Multimediainhalts ab der zweiten Ausgabeposition kann mit einer siebten Nachricht erfolgen. Die siebte Nachricht kann dem ersten Endgerät und/oder einem Server, welcher den Multimediainhalt ab der zweiten Ausgabeposition bereitstellt, mitgeteilt werden. Damit kann der Multimediainhalt nach Ausgabe des mindestens einen Zusatzinhalts über das zweite Endgerät ab der zweiten Ausgabeposition weiter oder nochmals über das erste Endgerät ausgegeben werden.

Das Verfahren endet in einem Schritt 109.

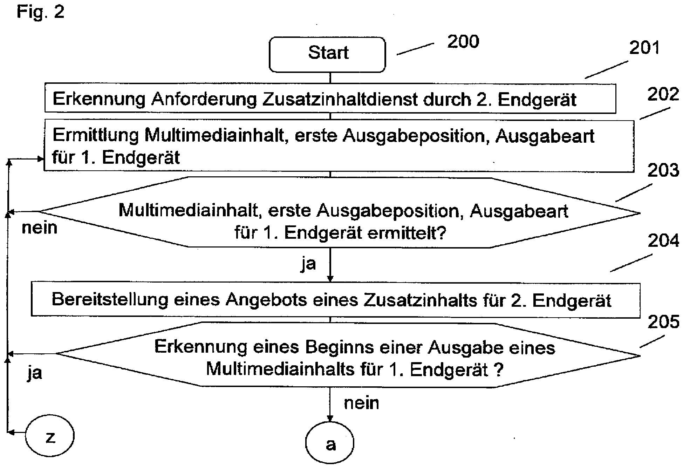

**Fig.2** zeigt einen ersten Teil eines Flussdiagramms wesentlicher Verfahrensschritte eines zweiten Ausführungsbeispiels für eine Bereitstellung eines Zusatzinhaltsangebots. Nach einem Start (Schritt 200) wird in einem Schritt 201 eine Anforderung für einen Zusatzinhaltdienst erkannt. Die Anforderung erfolgt von einem zweiten Endgerät. Dies kann in Form einer Anforderungsnachricht von dem zweiten Endgerät erfolgen. Dem zweiten Endgerät ist oder wird ein erstes Endgerät zugeordnet, wobei die Zuordnung des ersten zu dem zweiten Endgerät voreingestellt sein kann oder dynamisch bedarfsweise angefordert werden kann. Auch kann die Zuordnung mittelbar sein, z. B. über eine Nutzerkennung oder Nutzeridentifikation erfolgen. Hat ein Nutzer zwei Endgeräte, so kann aufgrund der Nutzerkennung bereits das erste Endgerät zugeordnet sein. Auch ist es möglich, dass die Anforderungsnachricht eine Identifikation des ersten Endgeräts umfasst. Diese Identifikation kann beispielsweise eine MAC Adresse oder eine Kennung eines mobilen Telefons sein, wie IMSI oder MSISDN. Die Anforderungsnachricht kann insbesondere Daten zur Prüfung einer Berechtigung für den Zusatzinhaltdienst und / oder für eine Steuerung des ersten Endgeräts umfassen.

In einem Schritt 202 werden anschließend ein über das erste Endgerät ausgegebener Multimediainhalt, eine erste Ausgabeposition des Multimediainhalts im Bezug auf die Ausgabe des Multimediainhalts über das erste Endgerät und eine Art der Ausgabe des Multimediainhalts ermittelt. Die Ermittlung dieser Daten kann Abfragen bei dem ersten Endgerät und/oder bei anderen Netzelementen erforderlich machen. Insbesondere kann hierzu eine Abfrage eines Video Servers oder eins Audio Servers erfolgen. Durch Auswertung von Antwortnachrichten des ersten Endgeräts und/oder anderer Netzelemente kann der Multimediainhalt durch Angabe des Titels und einer Adresse, einer Bibliothek oder eines Programmkanals vollständig identifiziert werden. Hiermit ist implizit insbesondere auch ein Typ des Multimediainhalts bestimmt. Insbesondere ist in Form des Typs des Multimediainhalts bestimmt, ob es sich um einen bereits aufgezeichneten, vom ersten Endgerät wiederholt abrufbaren Inhalt, wie zum Beispiel ein auf Anforderung bereitgestelltes Video, handelt oder ob es sich um ein nicht als Aufzeichnung zur Verfügung stehenden Multimediainhalt handelt, wie z. B. ein Live TV Programm. Zur Bestimmung des Typs des Multimediainhalts kann beispielsweise eine elektronische Programminformation wie z. B. EPG oder ESG herangezogen und ausgewertet werden. Ferner können die erste Ausgabeposition, beispielsweise durch Angabe einer relativen Zeit zu dem Anfang des Multimediainhalts, und die Art der Ausgabe, beispielsweise Ausgabe eines Videos in normaler Ausgabegeschwindigkeit ermittelt werden. Alternativ kann der über das erste Endgerät ausgegebene Multimediainhalt, die erste Ausgabeposition des Multimediainhalts im Bezug auf die Ausgabe des Multimediainhalts über das erste Endgerät und die Art der Ausgabe des Multimediainhalts schon vorliegen. Dies kann beispielsweise dann der Fall sein, wenn eine mit dem Ausspielfortschritt des Multimediainhalts vorgenommene unbedingte Information erfolgt über den über das erste Endgerät ausgegebenen Multimediainhalt, über die erste Ausgabeposition des Multimediainhalts im Bezug auf die Ausgabe des Multimediainhalts über das erste Endgerät und über die Art der Ausgabe des Multimediainhalts. Der Verfahrensschritt 202 kann auch über eine Fortsetzungsmarke z aus nachfolgenden Verfahrensschritten erreicht werden.

Wird in einem Schritt 203 festgestellt, dass der über das erste Endgerät ausgegebene Multimediainhalt, die erste Ausgabeposition des Multimediainhalts im Bezug auf die Ausgabe des Multimediainhalts über das erste Endgerät und die Art der Ausgabe des Multimediainhalts nicht ermittelt sind, so erfolgt Rückkehr zu dem Schritt 202, andernfalls erfolgt eine Bereitstellung eines Angebots eines mindestens einen Zusatzinhalts im Schritt 204. Die Bereitstellung des Angebots des mindestens einen Zusatzinhalts erfolgt für das zweite Endgerät, welches den Zusatzinhaltdienst angefordert hat. Zusätzlich oder alternativ kann die Bereitstellung des Angebots des mindestens einen Zusatzinhalts jedoch auch für das erste Endgerät erfolgen. Die Bereitstellung des Angebots des mindestens einen Zusatzinhalts kann eine Bereitstellung von Verweisadressen/Links umfassen, welche direkten Bezug zu dem gerade in Ausgabe befindlichen Teil des Multimediainhalts besitzen.

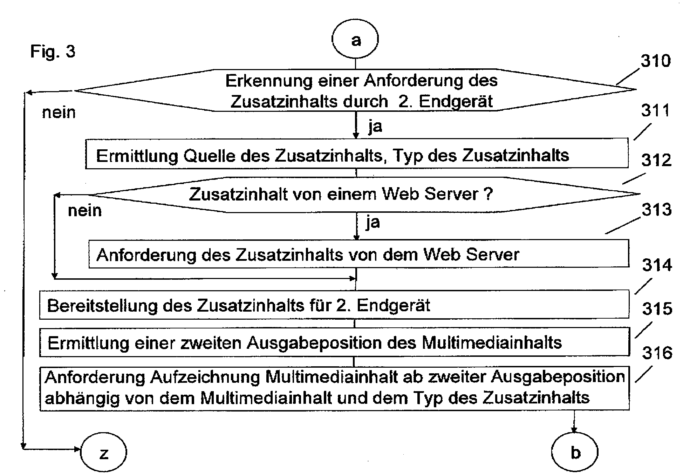

Durch Nutzereingaben an dem ersten Endgerät kann das erste Endgerät einen von dem Multimediainhalt verschiedenen anderen Multimediainhalt anfordern, beispielsweise durch einen Kanalwechsel oder den Abruf eines auf Anforderung zur Verfügung gestellten Multimediainhalts. Ebenso kann das erste Endgerät ein Ausspielen des Multimediainhalts von einer neuen Ausgabeposition oder in einer anderen Geschwindigkeit anfordern. Dies resultiert jeweils in einem Beginn einer Ausgabe eines oder des Multimediainhalts. Insbesondere ist auch ein Unterbrechen der Ausgabe des Multimediainhalts ein Beginn einer Ausgabe des Multimediainhalts mit der Ausgabegeschwindigkeit 0. Ein Beginn einer Ausgabe eines Multimediainhalts wird in einem Schritt 205 erkannt und führt zur Rückkehr zu dem Schritt 202, womit eine Aktualisierung des Angebots des Zusatzinhalts ermöglicht wird. Wird in dem Schritt 205 ein Beginn einer Ausgabe eines Multimediainhalts nicht erkannt, so wird das Verfahren mit einer Fortsetzungsmarke a der Fig.3 fortgesetzt.

Das Verfahren kann in jedem Verfahrensschritt durch eine Anforderung einer Beendigung des Zusatzinhaltsdienstes durch das zweite Endgerät beendet werden. Dies ist aus Gründen der Übersichtlichkeit in Fig.2 nicht dargestellt.

**Fig.3** zeigt einen zweiten Teil des Flussdiagramms wesentlicher Verfahrensschritte des zweiten Ausführungsbeispiels für eine Bereitstellung eines Zusatzinhalts. Über die Fortsetzungsmarke a wird das Verfahren mit einem Schritt 310 fortgesetzt, in welchem eine Erkennung einer Anforderung des zweiten Endgeräts für den mindestens einen Zusatzinhalt erfolgt. Kann keine Anforderung des zweiten Endgeräts für den mindestens einen Zusatzinhalt erkannt werden, so wird das Verfahren mit der Fortsetzungsmarke z der Fig.2 fortgesetzt.

Wird in dem Schritt 310 eine Anforderung des zweiten Endgeräts für den mindestens einen Zusatzinhalt erkannt, dann erfolgt in einem Schritt 311 eine Ermittlung der Quelle des angeforderten mindestens einen Zusatzinhalts und eine Ermittlung des Typs des angeforderten mindestens einen Zusatzinhalts. Wird in einem Schritt 312 festgestellt, dass der angeforderte mindestens eine Zusatzinhalt von einem Web Server bereitgestellt wird, so erfolgt im Verfahrensschritt 313 eine Anforderung des mindestens einen Zusatzinhalts von dem Web Server, welche beispielsweise in Form einer weiteren Anforderungsnachricht erfolgen kann.

In einem Schritt 314 erfolgt eine Bereitstellung des mindestens einen Zusatzinhalts für das zweite Endgerät. Der mindestens eine Zusatzinhalt kann hierbei entweder von dem Web Server bereitgestellt werden oder von einem anderen Netzelement, insbesondere Server. Das andere Netzelement kann den mindestens einen Zusatzinhalt bereitstellen, falls es die Quelle des Zusatzinhalts ist, also beispielsweise eine als Zusatzinhalt angebotene Informationsseite oder ein Video selbst lokal gespeichert hat und zum Abruf durch das zweite Endgerät bereithält oder falls es einen auf dem Web Server gespeicherten Zusatzinhalt anfordert zur Weiterübertragung an das zweite Endgerät.

In einem Schritt 315 wird eine zweite Ausgabeposition des Multimediainhalts ermittelt. Die zweite Ausgabeposition ist abhängig von der Anforderung des mindestens einen Zusatzinhalts und dient der Steuerung der Ausgabe und /oder der Bereitstellung des Multimediainhalts nach der Anforderung des mindestens einen Zusatzinhalts durch das zweite Endgerät. Die zweite Ausgabeposition wird beispielsweise ermittelt als die Ausgabeposition des Multimediainhalts, die zu dem Zeitpunkt erreicht ist, zu dem die Anforderung des mindestens einen Zusatzinhalts erkannt wird.

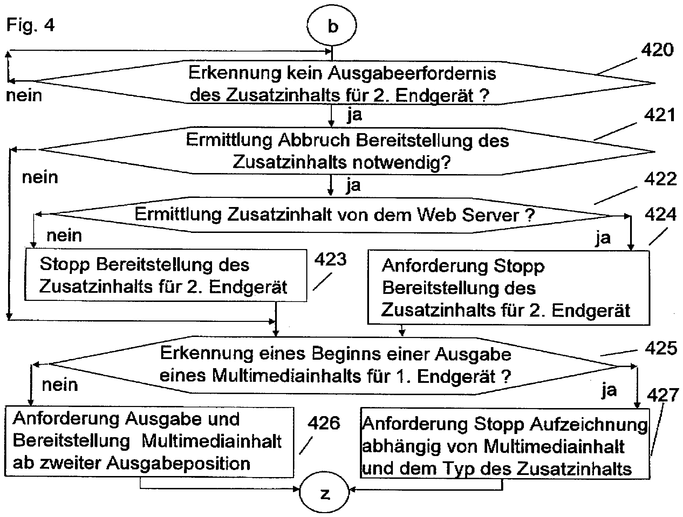

In einem Schritt 316 erfolgt eine Anforderung einer Aufzeichnung des Multimediainhalts ab der zweiten Ausgabeposition in Abhängigkeit von dem Multimediainhalt, beispielsweise von dem Typ des Multimediainhalts, und von dem Typ des Zusatzinhalts. Ist der Zusatzinhalt ein kurzer Textbeitrag, so kann beispielsweise eine Aufzeichnung entfallen, da es dem Nutzer möglich ist, den Zusatzinhalt zusätzlich zu dem Multimediainhalt aufzunehmen. Ist der Multimediainhalt beispielsweise ein Video auf Anforderung, so kann auf eine Aufzeichnung ebenfalls verzichtet werden, da das Video insbesondere ab der zweiten Ausgabeposition nochmals abgerufen werden kann. Ist der Multimediainhalt ein Live TV Programm und der Zusatzinhalt beispielsweise ein Video auf Anforderung oder ein weiteres Live TV Programm, so erfolgt die Anforderung einer Aufzeichnung des Multimediainhalts ab der zweiten Ausgabeposition. Das Verfahren wird sodann mit einer Fortsetzungsmarke b der Fig.4 fortgesetzt.

Das Verfahren kann in jedem Verfahrensschritt durch eine Anforderung einer Beendigung des Zusatzinhaltsdienstes durch das zweite Endgerät beendet werden, was aus Gründen der Übersichtlichkeit in Fig.3 nicht dargestellt ist.

**Fig.4** zeigt einen dritten Teil des Flussdiagramms wesentlicher Verfahrensschritte des zweiten Ausführungsbeispiels für eine Bereitstellung eines Zusatzinhalts. Über die Fortsetzungsmarke b wird das Verfahren mit einem Schritt 420 fortsetzt, in welchem eine Erkennung dafür vorgenommen wird, dass kein Ausgabeerfordernis des mindestens einen Zusatzinhalts für das zweite Endgerät besteht. Wird der mindestens eine Zusatzinhalt dem zweiten Endgerät direkt beispielsweise per Streaming bereitgestellt, so erfolgt die Erkennung, dass kein Ausgabeerfordernis für den mindestens einen Zusatzinhalt vorliegt dadurch, dass der mindestens eine Zusatzinhalt vollständig per Streaming bereitgestellt ist. Erfolgt die Bereitstellung des mindestens einen Zusatzinhalts für das zweite Endgerät durch den Web Server direkt, indem der mindestens eine Zusatzinhalt per Streaming von dem Web Server direkt zu dem zweiten Endgerät übertragen wird, so erfolgt die Erkennung, dass kein Ausgabeerfordernis für den mindestens einen Zusatzinhalt vorliegt, beispielsweise durch Auswertung einer ersten weiteren Nachricht des zweiten Endgeräts oder des Web Servers. Geht aus dem Typ des mindestens einen Zusatzinhalts beispielsweise hervor, dass aus der vollständigen Bereitstellung des mindestens einen Zusatzinhalts nicht auf ein Ende der Ausgabenotwendigkeit des mindestens einen Zusatzinhalts an dem zweiten Endgerät geschlossen werden kann, dann wird durch einen Erhalt einer zweiten weiteren Nachricht von dem zweiten Endgerät erkannt, dass kein Ausgabeerfordernis für den mindestens einen Zusatzinhalt über das zweite Endgerät besteht. Die Erkennung, dass kein Ausgabeerfordernis für den mindestens einen Zusatzinhalt über das zweite Endgerät besteht, erfolgt über die zweite weitere Nachricht insbesondere dann, wenn der mindestens eine Zusatzinhalt ein statischer Inhalt ist, beispielsweise ein Bild, ein Text oder eine Internetseite. In diesen Fällen ist es a priori unklar, wie lange der Nutzer eine Ausgabe des mindestens einen Zusatzinhalts an dem zweiten Endgerät benötigt.

Die Erkennung, dass kein Ausgabeerfordernis für den mindestens einen Zusatzinhalt über das zweite Endgerät besteht, kann ebenfalls durch eine Erkennung eines Beginns einer Ausgabe des Multimediainhalts oder eine Erkennung eines Beginns einer Ausgabe eines anderen Multimediainhalts über das erste Endgerät erfolgen. Dies ist beispielsweise der Fall, wenn das erste Endgerät eine Ausgabe des Multimediainhalts oder eine Ausgabe des anderen Multimediainhalts anfordert, wenn also der Nutzer an dem Multimediainhalt und/oder dem mindestens einen Zusatzinhalt kein Interesse mehr hat und beispielsweise zu einem anderen Programm wechselt oder eine Fortsetzung der Ausgabe des Multimediainhalts initiiert. Die Erkennung eines Beginns einer Ausgabe des Multimediainhalts oder des anderen Multimediainhalts kann beispielsweise über einen Erhalt einer dritten weiteren Nachricht des ersten Endgeräts, eines VoD Servers, einer TV Kopfstelle oder eines Streaming Servers erfolgen.

Der Schritt 420 endet damit, dass erkannt wird, dass kein Ausgabeerfordernis für den mindestens einen Zusatzinhalt über das zweite Endgerät besteht. In einem Schritt 421 wird daraufhin ermittelt, ob ein Abbruch der Bereitstellung des mindestens einen Zusatzinhalts erforderlich ist, da der Nutzer beispielsweise die Ausgabe des Zusatzinhalts über Eingaben am zweiten Endgerät beendet hat. Ist der Abbruch der Bereitstellung des mindestens einen Zusatzinhalts nicht notwendig, so wird das Verfahren mit dem Schritt 425 fortgesetzt. Wird in dem Schritt 421 festgestellt, dass der Abbruch der Bereitstellung des mindestens einen Zusatzinhalts notwendig ist, dann wird in einem Schritt 422 ermittelt, ob der mindestens eine Zusatzinhalt von dem Web Server bereitgestellt wird. Ist das nicht der Fall, dann erfolgt in einem Schritt 423 ein Stopp der Bereitstellung des mindestens einen Zusatzinhalts für das zweite Endgerät, andernfalls erfolgt in einem Schritt 424 eine Anforderung eines Stopps der Bereitstellung des mindestens einen Zusatzinhalts für das zweite Endgerät. Die Anforderung des Stopps der Bereitstellung des mindestens einen Zusatzinhalts für das zweite Endgerät kann in Form einer vierten weiteren Nachricht an den Web Server übertragen werden. Nach den Schritten 423 und 424 wird das Verfahren mit dem Schritt 425 fortgesetzt.

Im Schritt 425 wird festgestellt, ob eine Erkennung eines Beginns einer Ausgabe eines Multimediainhalts an dem ersten Endgerät vorliegt. Ist dies der Fall, so erfolgt im Schritt 427 eine Anforderung eines Stopps der Aufzeichnung des Multimediainhalts, falls diese im Verfahrenschritt 316 in Abhängigkeit von dem Multimediainhalt, insbesondere von dem Typ des Multimediainhalts, und dem Typ des Zusatzinhalts angefordert wurde. Dadurch dass der Nutzer in diesem Falle über entsprechende Eingaben an dem ersten Endgerät eine Ausgabe des Multimediainhalts oder eine Ausgabe des anderen Multimediainhalts initiiert, zeigt er an, dass eine weitere Aufzeichnung des Multimediainhalts nicht mehr erforderlich ist.

Wird im Schritt 425 festgestellt, dass keine Erkennung eines Beginns einer Ausgabe eines Multimediainhalts an dem ersten Endgerät vorliegt, so liegt der Fall vor, dass der Nutzer lediglich kein weiteres Interesse an der Ausgabe des mindestens einen Zusatzinhalts hat oder dass der mindestens eine Zusatzinhalt vollständig beispielsweise per Streaming bereitgestellt ist und sein Ende erreicht hat. In diesem Fall wird das Verfahren in einem Schritt 426 fortgesetzt, in welchem eine Ausgabe des Multimediainhalts ab der zweiten Ausgabeposition angefordert wird und daraufhin eine Bereitstellung des Multimediainhalts ab der zweiten Ausgabeposition erfolgt. Ist der Multimediainhalt beispielsweise ein Video auf Anforderung, so kann die Anforderung der Ausgabe des Multimediainhalts ab der zweiten Ausgabeposition mit einer fünften weiteren Nachricht erfolgen, welche an einen VoD Server und/oder das erste Endgerät übertragen wird. Ist der Multimediainhalt beispielsweise ein Live TV Programm, so kann die Anforderung der Ausgabe des Multimediainhalts ab der zweiten Ausgabeposition mit einer sechsten weiteren Nachricht erfolgen, welche an einen PVR Server, der das Live TV Programm aufzeichnet, und/oder das erste Endgerät. Der PVR Server kann hierbei beispielsweise ein netzbasierter zentraler PVR Server sein oder ein in dem ersten Endgerät integrierter PVR Server.

Nach den Schritten 426 bzw. 427 wird das Verfahren mit der Fortsetzungsmarke z der Figur 1 fortgesetzt.

Das Verfahren kann in jedem Verfahrensschritt durch eine Anforderung einer Beendigung des Zusatzinhaltsdienstes durch das zweite Endgerät beendet werden, was aus Gründen der Übersichtlichkeit in Fig.4 nicht dargestellt ist.

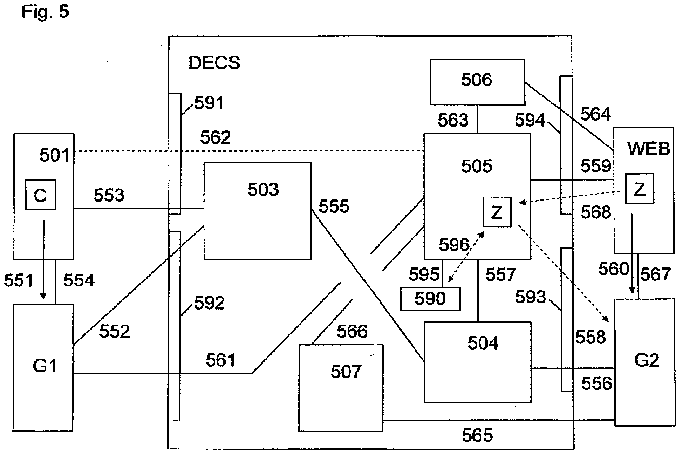

**Fig.5** zeigt eine vereinfachte Blockdarstellung eines Ausführungsbeispiels zur Veranschaulichung einer Vorrichtung zum Zugriff auf Zusatzinhalte für Multimediainhalte.

Eine Vorrichtung DECS zum Zugriff auf Zusatzinhalte für Multimediainhalte umfasst eine erste Einheit 503, welche über eine Kommunikationsbeziehung 553 mit einem einen Multimediainhalt C bereitstellenden Netzelement 501 in Verbindung steht. Das Netzelement 501 kann beispielsweise insbesondere ein VoD Server, ein PVR Server, eine TV Kopfstelle, ein Streaming Server oder ein DSLAM sein. Der Multimediainhalt C kann von einem ersten Endgerät G1 über eine Kommunikationsbeziehung 554 von dem Netzelement 501 abgerufen oder angefordert werden. Die Anforderung des Multimediainhalts C kann in Form einer ersten Nachricht erfolgen. Nach erfolgter Anforderung des Multimediainhalts C wird der Multimediainhalt C von dem Netzelement 501 mit Hilfe der Kommunikationsbeziehung 551 zu dem ersten Endgerät G1 übertragen. Dies kann beispielsweise durch ein Streaming über ein RTSP Protokoll und / oder ein Download mittels mindestens einem der Protokolle UDP, TCP, FTP, TFTP, RTP, HTTP, SOAP erfolgen. Über eine Kommunikationsbeziehung 552 kann die erste Einheit 503 in Verbindung mit dem ersten Endgerät G1 stehen. Über mindestens eine der Kommunikationsbeziehungen 552 und 553 erkennt die erste Einheit 503 einen Beginn einer Ausgabe des Multimediainhalts C für das erste Endgerät G1 und ermittelt den Multimediainhalt C, eine erste Ausgabeposition des Multimediainhalts C und eine Art der Ausgabe des Multimediainhalts. Die Erkennung des Beginns der Ausgabe des Multimediainhalts C kann durch eine Benachrichtigung der ersten Einheit 503 durch das Netzelement 501 und /oder das erste Endgerät G1 erfolgen oder durch Abfrage des Netzelements 501 und / oder des ersten Endgeräts G1 durch die erste Einheit 503. Die Ermittlung des Multimediainhalts C, der ersten Ausgabeposition des Multimediainhalts C und der Art der Ausgabe des Multimediainhalts C kann durch Auswertung der Benachrichtigung der ersten Einheit 503 durch das Netzelement 501 und /oder das erste Endgerät G1 erfolgen oder durch Abfrage des Netzelements 501 und / oder des ersten Endgeräts G1 durch die erste Einheit 503 sowie durch Auswertung elektronischer Programminformationen. Die nach Erkennung des Beginns der Ausgabe des Multimediainhalts C ermittelten Daten werden von der ersten Einheit 503 einer zweiten Einheit 504 der Vorrichtung DECS über eine Kommunikationsbeziehung 555 zur Verfügung gestellt.

Die zweite Einheit 504 der Vorrichtung DECS stellt einem zweiten Endgerät G2 über eine Kommunikationsbeziehung 556 ein Angebot eines mindestens einen Zusatzinhalts Z bereit. Das Angebot, insbesondere der mindestens eine Zusatzinhalt Z, ist abhängig von dem Multimediainhalt C, der ersten Ausgabeposition des Multimediainhalts C und der Art der Ausgabe des Multimediainhalts C. Das Angebot kann zusätzlich beispielsweise abhängig sein von der Zeit seit dem Beginn der Ausgabe des Multimediainhalts C oder der Erkennung des Beginns der Ausgabe des Multimediainhalts C. Stößt das Angebot des mindestens einen Zusatzinhalts Z auf das Interesse eines Nutzers des zweiten Endgeräts G2, dann macht der Nutzer zur Anforderung des mindestens einen Zusatzinhalts geeignete des Eingaben an dem zweiten Endgerät G2. Dies führt zu einer Anforderung des mindestens einen Zusatzinhalts Z über die Kommunikationsbeziehung 556. Erkennt die zweite Einheit 504 die Anforderung des mindestens einen Zusatzinhalts Z, so informiert sie hiervon eine dritte Einheit 505 der Vorrichtung DECS über eine Kommunikationsbeziehung 557.

Die dritte Einheit 505 ermittelt in Abhängigkeit von der Anforderung des mindestens einen Zusatzinhalts eine zweite Ausgabeposition des Multimediainhalts. Die ermittelte zweite Ausgabeposition des Multimediainhalts C kann über eine Kommunikationsbeziehung 561 dem ersten Endgerät G1 und/oder über eine Kommunikationsbeziehung 562 dem Netzelement 501 durch die dritte Einheit 505 bereitgestellt werden. Diese Bereitstellung erfolgt in Abhängigkeit von dem Multimediainhalt C und/oder dem mindestens einen Zusatzinhalt Z. Ebenso kann die dritte Einheit 505 alternativ oder zusätzlich eine Speicherung der zweiten Ausgabeposition durchführen. Hierzu kann die dritte Einheit die zweite Ausgabeposition des Multimediainhalts in einer Speichereinheit 590 der Vorrichtung DECS hinterlegen. Die Speichereinheit 590 ist über eine Kommunikationsbeziehung 595, welche beispielsweise als Bus ausgebildet sein kann, mit der dritten Einheit 505 verbunden. Die zweite Ausgabeposition des Multimediainhalts C dient der Steuerung der Ausgabe des Multimediainhalts C über das erste Endgerät G1, insbesondere einem automatischen Stopp der Ausgabe des Multimediainhalts C, einer Fortsetzung der Ausgabe des Multimediainhalts C ab der zweiten Ausgabeposition, einer Aufzeichnung des Multimediainhalts C ab der zweiten Ausgabeposition, einer automatischen zeitversetzten Wiedergabe des Multimediainhalts C ab der zweiten Ausgabeposition und / oder einer Modifikation der Ausgabe des Multimediainhalts C ab der zweiten Ausgabeposition. Eine Steuerung der Ausgabe des Multimediainhalts C über das erste Endgerät G1 kann durch die dritte Einheit 505 erfolgen unter Nutzung der Kommunikationsbeziehung 561 und / oder der Kommunikationsbeziehung 562.

Hat die dritte Einheit 505 den angeforderten mindestens einen Zusatzinhalt Z beispielsweise in der Speichereinheit 590 lokal gespeichert, so stellt die dritte Einheit 505 den mindestens einen Zusatzinhalt Z dem zweiten Endgerät G2 mit Hilfe einer Kommunikationsbeziehungen 558 und der Kommunikationsbeziehung 595 bereit. Dies kann beispielsweise durch ein Streaming über ein RTSP Protokoll und / oder ein Download mittels mindestens einem der Protokolle UDP, TCP, FTP, TFTP, RTP, HTTP, SOAP erfolgen. Eine Hinterlegung des mindestens einen Zusatzinhalts Z in der Speichereinheit 590 und ein Abruf des hinterlegten mindestens einen Zusatzinhalts Z aus der Speichereinheit 590 ist durch eine Kommunikationsbeziehung 596 veranschaulicht. Die Kommunikationsbeziehung 596 kann die Kommunikationsbeziehung 595 nutzen.

Ist der mindestens eine Zusatzinhalt Z auf einem Netzelement WEB verfügbar, so fordert die dritte Einheit 505 den mindestens einen Zusatzinhalt Z von dem Netzelement WEB über eine Kommunikationsbeziehung 559 an. Das Netzelement WEB kann insbesondere ein Web Server sein. Es stellt in Abhängigkeit von der Anforderung den mindestens einen Zusatzinhalt Z über eine Kommunikationsbeziehung 568 der dritten Einheit 505 zur Verfügung oder über eine Kommunikationsbeziehung 560 dem zweiten Endgerät G2. Dies kann beispielsweise jeweils durch ein Streaming über ein RTSP Protokoll und / oder ein Download mittels mindestens einem der Protokolle UDP, TCP, FTP, TFTP, RTP, HTTP, SOAP erfolgen. Eine Bereitstellung des mindestens einen auf dem Netzelement WEB vorgehaltenen mindestens einen Zusatzinhalts Z für das zweite Endgerät kann auch dadurch erfolgen, dass die dritte Einheit Zugriffsdaten für den mindestens einen Zusatzinhalt Z ermittelt und dem zweiten Endgerät G2 beispielsweise unter Nutzung der Kommunikationsbeziehungen 556 und 557 zur Verfügung stellt, woraufhin das zweite Endgerät G2 den mindestens einen Zusatzinhalt Z von dem Netzelement WEB über eine Kommunikationsbeziehung 567 anfordert.

Die Vorrichtung DECS kann eine vierte Einheit 506 umfassen, welche eine statistische Bewertung der Anforderung des mindestens einen Zusatzinhalts Z und /oder einer Ausgabedauer des mindestens einen Zusatzinhalts Z durchführt. Die vierte Einheit 506 ermittelt die Anforderung und / oder die Ausgabedauer über eine Kommunikationsbeziehung 563, die sie mit der dritten Einheit 505 verbindet, und eine Kommunikationsbeziehung 564, die sie mit dem Netzelement WEB verbindet. Über die Kommunikationsbeziehungen 563 und / oder 564 erhält die vierte Einheit 506 Kenntnis über die Anforderung des mindestens einen Zusatzinhalts Z und die Ausgabedauer des mindestens einen Zusatzinhalts Z. Ein Ergebnis der statistischen Bewertung durch die vierte Einheit 506 wird der dritten Einheit 505 und/oder der zweiten Einheit 504 über die Kommunikationsbeziehungen 563, 557 bereitgestellt. Damit kann die statistische Bewertung in ein zukünftiges Angebot eines mindestens einen Zusatzinhalts Z für den Multimediainhalt C einfließen, welches durch die zweite Einheit 504 bereitgestellt wird.

Die Vorrichtung DECS kann eine fünfte Einheit 507 umfassen, welche über eine Kommunikationsbeziehung 565 mit dem zweiten Endgerät G2 in Verbindung steht und über eine Kommunikationsbeziehung 566 mit der dritten Einheit 505 in Verbindung steht. Über die Kommunikationsbeziehung 565 kann das zweite Endgerät beispielsweise einen bisher nicht angebotenen weiteren Zusatzinhalt zur Aufnahme in ein zukünftiges Angebot eines mindestens einen Zusatzinhalts für den Multimediainhalt C vorschlagen. Hierzu stellt das zweite Endgerät der fünften Einheit 507 eine Identifizierung des weiteren Zusatzinhalts zur Verfügung. Die fünfte Einheit erkennt die Identifizierung, ermittelt den mit der Identifizierung verbundenen weiteren Zusatzinhalt und prüft diesen optional auf Zulässigkeit, Verfügbarkeit und nach anderen Kriterien. Bei positiver Prüfung des weiteren Zusatzinhalts ermittelt die fünfte Einheit 507 mindestens eine dritte Ausgabeposition des Multimediainhalts C für den weiteren Zusatzinhalt und initiiert eine Aufnahme des weiteren Zusatzinhalts in ein zukünftiges Angebot eines mindestens einen Zusatzinhalts für den Multimediainhalt C. Letzteres erfolgt beispielsweise dadurch, dass die Einheit 507 der dritten Einheit 505 über die Kommunikationsbeziehung 566 Zugriffsdaten des weiteren Zusatzinhalts und die ermittelte mindestens eine dritte Ausgabeposition des Multimediainhalts C zur Verfügung stellt. Damit kann ein durch die zweite Einheit 504 bereitzustellendes zukünftiges Angebot eines mindestens einen Zusatzinhalts für den Multimediainhalt C den weiteren Zusatzinhalt umfassen.

Die Vorrichtung DECS umfasst ferner eine Schnittstelleneinheit 591 zur Kommunikation mit dem Netzelement 501, eine Schnittstelleneinheit 592 zur Kommunikation mit dem ersten Endgerät G1, eine Schnittstelleneinheit 593 zur Kommunikation mit dem Netzelement WEB und eine Schnittstelleneinheit 594 zur Kommunikation mit dem zweiten Endgerät G2. In einer alternativen Ausgestaltung können mehrere der Schnittstelleneinheiten 591, 592, 593, 594 auch zu größeren Schnittstelleneinheiten zusammengefasst sein.

Die Vorrichtung DECS kann als Server oder als Server Farm realisiert sein entsprechend der erforderlichen Performanz. Hierbei ist die erforderliche Performanz u. a. abhängig von der Anzahl der gleichzeitig mit dem Zusatzinhaltdienst zu bedienenden Endgeräte. Die Vorrichtung DECS kann insbesondere von einem Video/Audio Dienstanbieter betrieben werden. Ebenso kann die Vorrichtung DECS von einem bloßen Anbieter eines Zusatzinhaltdiensts betrieben werden. Eine Subskribierung für den Zusatzinhaltdienst kann über eine Standard Web Seite, beispielsweise mittels HTTPS, erfolgen. Hierzu kann das zweite Endgerät G2 persönliche Daten, wie Nutzerkennung, Passwort, Adresse, email-Adresse, Bankverbindung, Kreditkartennummer, zur Verfügung stellen. Die Vorrichtung DECS kann autorisiert sein, persönliche Informationen eines subskribierten Nutzers des Zusatzinhaltdienstes von anderen Servern, insbesondere von dem Netzelement 501, welches ein Audio / Video Server sein kann, abzufragen. Hiermit kann die Vorrichtung DECS beispielsweise Kenntnis erlangen über den von einem subskribierten Nutzer angeforderten Multimediainhalt und den erreichten Ausspielfortschritt. Ebenfalls kann durch entsprechende Autorisierung eine Single Sign-on Authentifizierung für das Netzelement 501 und die Vorrichtung DECS erreicht werden.

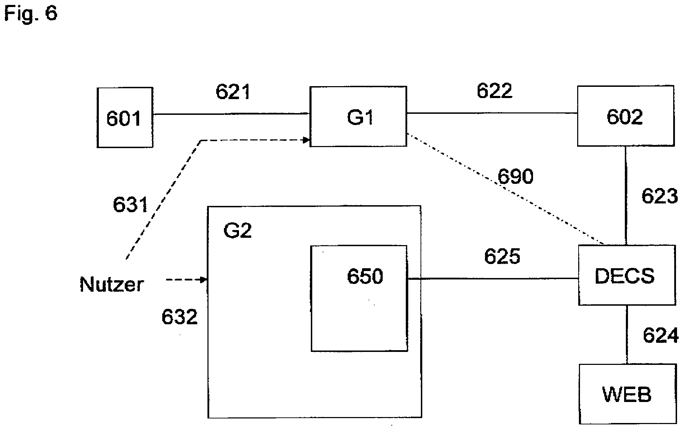

**Fig.6** zeigt eine vereinfachte Blockdarstellung eines Ausführungsbeispiels zur Veranschaulichung einer Bereitstellung eines Zusatzinhalts für einen von einem VoD Server abrufbaren Multimediainhalt. Ein Fernsehgerät 601 ist als audio-/ videotaugliche Ausgabeeinheit an eine Set Top Box G1 über eine Verbindung 621 angeschlossen. Die Verbindung 621 erfüllt beispielsweise die Anforderungen einer HDMI Schnittstelle. Zwischen der Set Top Box G1 und einem VoD Server 602 besteht eine Kommunikationsbeziehung 622. Zwischen dem VoD Server 602 und einem Server DECS, welcher einen Zusatzinhaltdienst für einen Lap-top G2 bereitstellt, besteht eine Kommunikationsbeziehung 623. Zwischen dem Server DECS und dem Lap-top G2 besteht eine Kommunikationsbeziehung 625. Zwischen dem Server DECS und einem Server WEB, welcher einen mindestens einen Zusatzinhalt, beispielsweise einen Audio/Video-Inhalt oder einen reinen Audio-Inhalt, auf Anforderung bereitstellt, besteht eine Kommunikationsbeziehung 624. Der Lap-top G2 besitzt einen Browser 650, welcher ein Plugin besitzt zur Unterstützung einer Kommunikation mit dem Server DECS. Ein Nutzer hat über Eingaben steuernden Zugriff auf die Set Top Box G1, was durch den Pfeil 631 veranschaulicht wird, und steuernden Zugriff auf den Lap-top G2, was durch den Pfeil 632 veranschaulicht wird.

Nach Einschalten der Set Top Box G1 registriert sich diese beispielsweise mittels einer Registrierungsnachricht bei dem VoD Server 602 mit einer Nutzerkennung. Der Nutzer wählt ein auf Abruf verfügbares Video aus und fordert dieses an, worauf die Set Top Box G1 eine erste Anforderungsnachricht für das Video an den VoD Server 602 sendet. Die Registrierungsnachricht und die erste Anforderungsnachricht können beispielweise mittels http übertragen werden. Hierauf stellt der VoD Server 602 der Set Top Box G1 das Video beispielsweise per Streaming mittels RTSP zur Verfügung. Zusätzlich kann der VoD Server 602 den Server DECS davon informieren, dass dem Nutzer und/oder der Set Top Box G1 aktuell das Video zur Verfügung gestellt wird. Dies kann über eine XML/ http basierte Nachricht erfolgen, welche eine Identifizierung des Videos sowie eine Identifizierung des Nutzers und/oder eine Identifizierung der Set Top Box G1 umfasst.

Der Nutzer registriert und authentifiziert den Lap-top G2 an dem Server DECS, beispielsweise durch Eingabe einer Nutzerkennung und eines Passworts, woraufhin der Lap-top G2 eine weitere Registrierungsnachricht an den Server DECS sendet. Nach erfolgter Registrierung und Authentifizierung des Lap-top G2 an dem Server DECS fordert der Nutzer einen Zusatzinhaltdienst an, woraufhin der Lap-top G2 eine zweite Anforderungsnachricht für den Zusatzinhaltdienst an den Server DECS schickt.

Der Server DECS überprüft, ob er bereits eine aktuelle Information darüber hat, welcher Audio/Video-Inhalt dem Nutzer bereitgestellt wird. Ist dies nicht der Fall, dann fordert der Server DECS die aktuelle Information mittels einer dritten Anforderungsnachricht von dem VoD Server 602 an und erhält die aktuelle Information in Form einer dritten Quittungsnachricht.

Die aktuelle Information umfasst insbesondere eine Identifikation des Videos auf Anforderung, eine Ausgabeposition des Videos auf Anforderung und einen mit der Ausgabeposition assoziierten Zeitpunkt. Die Ausgabeposition des Videos auf Anforderung und der mit der Ausgabeposition assoziierte Zeitpunkt ermöglichen es dem Server DECS, den Ausspielfortschritt des Videos zu ermitteln und ein synchronisiertes, dem Ausspielfortschritt entsprechendes Angebot eines mindestens einen Zusatzinhalts bereitzustellen. Der VoD Server 602 aktualisiert die aktuelle Information insbesondere beispielsweise dann, wenn die Set Top Box G1 die Bereitstellung des Videos unterbricht oder verändert. Der VoD Server 602 kann die aktuelle Information hierbei über eine Folgenachricht an den Server DECS aktualisieren.

Mit Verfügbarkeit der aktuellen Information, welcher Audio/Video-Inhalt dem Nutzer bereitgestellt wird, sendet der Server DECS dem Lap-top G2 Angebote für dynamischen Zusatzinhalt, welche in direkter Beziehung stehen zu dem Teil des Audio/Video-Inhalts, welcher der Set Top Box G1 jeweils aktuell bereitgestellt wird. Die Angebote für dynamischen Zusatzinhalt können insbesondere beispielsweise Links oder Verweisadressen umfassen. Jeder angebotene Zusatzinhalt ist durch eine Identifikation eindeutig bestimmt.

Mit Auswahl eines angebotenen Zusatzinhalts durch den Nutzer sendet der Lap-top G2 eine vierte Anforderungsnachricht für den Zusatzinhalt an den Server DECS. Die vierte Anforderungsnachricht umfasst die Identifikation des angeforderten Zusatzinhalts.

Falls der beispielsweise über einen Link oder eine Verweisadresse in der vierten Anforderungsnachricht identifizierte Zusatzinhalt von dem Server WEB bereitgestellt wird, dann sendet der Server DECS dem Server WEB nach Erhalt und Auswertung der vierten Anforderungsnachricht eine fünfte Anforderungsnachricht zur Bereitstellung des Zusatzinhalts. Hierbei kann der Server DECS ein WEB Dienst API des Servers WEB nutzen. Nach Erhalt des von dem Server WEB angeforderten Zusatzinhalts kann der Server DECS den Zusatzinhalt in Form einer HTML Seite aufbereiten, welche dem Lap-top G2 bereitgestellt werden kann.

Sodann sendet der Server DECS dem VoD Server 602 eine erste Steuerungs- insbesondere Trickplay -Anforderung in Form einer sechsten Anforderungsnachricht. Diese instruiert den VoD Server 602, die Bereitstellung des Videos zu unterbrechen.

Weiters sendet der Server DECS dem Lap-top G2 den über die vierte Anforderungsnachricht angeforderten Zusatzinhalt. Der Zusatzinhalt kann hierbei beispielsweise auf dem Server DECS lokal gespeicherter Zusatzinhalt sein oder Zusatzinhalt, welchen der Server DECS auf Anforderung von dem Server WEB bereitgestellt bekommen hat. Der Zusatzinhalt kann insbesondere in Form einer HTML Seite bereitgestellt werden und mittels http zu dem Lap-top übertragen werden. Ebenso kann der Zusatzinhalt abhängig von seinem Typ beispielsweise als MPEG- kodierter Inhalt über RTP oder RTSP von dem Server DECS zu dem Lap-top G2 übertragen werden.

Hat der Server DECS den angeforderten Zusatzinhalt vollständig übertragen oder empfängt er von dem Lap-top G2 eine siebte Anforderungsnachricht, welche den Server DECS darüber informiert, dass kein Ausgabeerfordernis für den Zusatzinhalt mehr besteht, dann sendet der Server DECS eine zweite Steuerungs- insbesondere Trickplay -Anforderung an den VoD Server 602 in Form einer achten AnForderungsnachricht. Diese instruiert den VoD Server 602, die Bereitstellung des Videos durch Streaming wiederaufzunehmen. Daraufhin wird das Video ab der Unterbrechungsstelle der Set Top Box G1 weiter bereitgestellt.

Gemäß einer alternativen Ausführungsform kann die Kommunikationsbeziehung 623 zwischen dem Server DECS und dem VoD Server 602 nicht bestehen. An ihre Stelle kann eine Kommunikationsbeziehung 690 zwischen der Set Top Box G1 und dem Server DECS treten. Die alternative Ausführungsführungsform ist identisch mit der voran stehenden bis auf den Umstand, dass zwischen dem Server DECS und dem VoD Server 602 direkt ausgetauschte Nachrichten in der alternativen Ausführungsform über die Set Top Box G1 geführt werden. Dies hat den Vorteil einer koordinierten Ansteuerung des VoD Servers 602 sowohl durch den Server DECS als auch durch Eingaben des Nutzers. Ferner ist die alternative Ausführungsform dann vorteilhaft, wenn keine direkte Kommunikationsbeziehung zwischen dem VoD Server 602 und dem Server DECS möglich ist aufgrund z. B. von wirtschaftlichen oder geschäftspolitischen Gründen im Falle konkurrierender Dienstanbieter für VoD-Dienst und Zusatzinhaltdienst.

Im Unterschied zu dem voran stehend beschriebenen Ausführungsbeispiel kann die Set Top Box G1 den Server DECS gemäß der alternativen Ausführungsform davon informieren, dass aufgrund der ersten Anforderungsnachricht das Video durch den VoD Server zur Verfügung gestellt wird.

Im Unterschied zu dem voran stehend beschriebenen Ausführungsbeispiel sendet der Server DECS der Set Top Box G1 die erste Steuerungs- insbesondere Trickplay -Anforderung in Form der sechsten Anforderungsnachricht, die diese an den VoD Server 602 weiterleitet. Diese instruiert den VoD Server 602, die Bereitstellung des Videos zu unterbrechen.

Im Unterschied zu dem voran stehend beschriebenen Ausführungsbeispiel sendet der Server DECS die zweite TrickPlay Anforderung an die Set Top Box G1 in Form einer achten Anforderungsnachricht, die diese an den VoD Server 602 weiterleitet. Diese instruiert den VoD Server 602, die Bereitstellung des Videos durch Streaming wiederaufzunehmen.

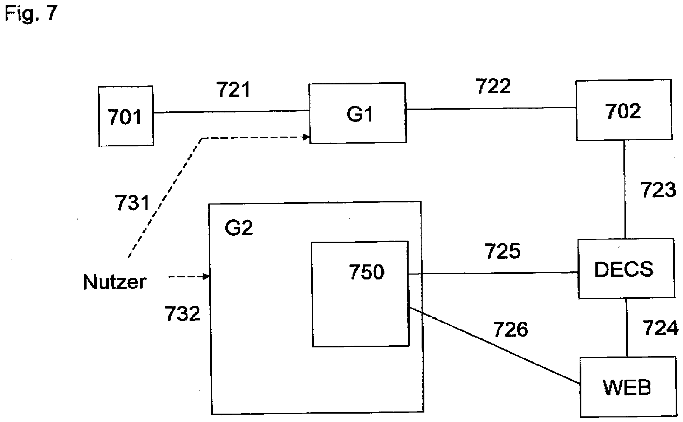

**Fig.7** zeigt eine vereinfachte Blockdarstellung eines Ausführungsbeispiels zur Veranschaulichung einer Bereitstellung eines Zusatzinhalts für einen von einem VoD Server abrufbaren Multimediainhalt. Ein Fernsehgerät 701 ist als audio-/ videotaugliche Ausgabeeinheit an eine Set Top Box G1 über eine Verbindung 721 angeschlossen. Die Verbindung 721 erfüllt beispielsweise die Anforderungen einer HDMI Schnittstelle. Zwischen der Set Top Box G1 und einem VoD Server 702 besteht eine Kommunikationsbeziehung 722. Zwischen dem VoD Server 702 und einem Server DECS, welcher einen Zusatzinhaltdienst für einen Lap-top G2 bereitstellt, besteht eine Kommunikationsbeziehung 723. Zwischen dem Server DECS und dem Lap-top G2 besteht eine Kommunikationsbeziehung 725. Zwischen dem Server DECS und einem Server WEB, welcher einen mindestens einen Zusatzinhalt, beispielsweise einen Audio/Video-Inhalt oder einen reinen Audio-Inhalt, auf Anforderung bereitstellt, besteht eine Kommunikationsbeziehung 724. Zwischen dem Server WEB und dem Lap-top G2 besteht einen Kommunikationsbeziehung 726. Der Lap-top G2 besitzt einen Browser 750, welcher ein Plugin besitzt zur Unterstützung einer Kommunikation mit dem Server DECS. Ein Nutzer hat über Eingaben steuernden Zugriff auf die Set Top Box G1, was durch den Pfeil 731 veranschaulicht wird, und steuernden Zugriff auf den Lap-top G2, was durch den Pfeil 732 veranschaulicht wird.

Nach Einschalten der Set Top Box G1 registriert sich diese beispielsweise mittels einer Registrierungsnachricht bei dem VoD Server 702 mit einer Nutzerkennung. Der Nutzer wählt ein auf Abruf zur Verfügung stehendes Video aus und fordert dieses an, worauf die Set Top Box G1 eine erste Anforderungsnachricht an den VoD Server 702 sendet. Die Registrierungsnachricht und die erste Anforderungsnachricht können beispielweise mittels http übertragen werden. Hierauf stellt der VoD Server 702 der Set Top Box G1 das Video beispielsweise per Streaming mittels RTSP zur Verfügung. Zusätzlich kann der VoD Server 702 den Server DECS davon informieren, dass dem Nutzer und/oder der Set Top Box G1 aktuell das Video zur Verfügung gestellt wird. Dies kann über eine XML/ http basierte Nachricht erfolgen, welche eine Identifizierung des Videos sowie eine Identifizierung des Nutzers und/oder eine Identifizierung der Set Top Box G1 umfasst.

Der Nutzer registriert und authentifiziert den Lap-top G2 an dem Server DECS durch Eingabe von Nutzerkennung und Passwort, woraufhin der Lap-top G2 eine weitere Registrierungsnachricht an den Server DECS sendet. Nach erfolgter Registrierung und Authentifizierung des Lap-top G2 an dem Server DECS fordert der Nutzer einen Zusatzinhaltdienst an, woraufhin der Lap-top G2 eine zweite Anforderungsnachricht für den Zusatzinhaltdienst an den Server DECS schickt.

Der Server DECS überprüft, ob er bereits eine aktuelle Information darüber hat, welcher Audio/Video-Inhalt dem Nutzer bereitgestellt wird. Ist dies nicht der Fall, dann fordert der Server DECS die aktuelle Information mittels einer dritten Anforderungsnachricht von dem VoD Server 702 an und erhält die aktuelle Information in Form einer dritten Quittungsnachricht.

Die aktuelle Information umfasst insbesondere eine Identifikation des Videos auf Anforderung, eine Ausgabeposition des Videos auf Anforderung und einen mit der Ausgabeposition assoziierten Zeitpunkt. Die Ausgabeposition des Videos auf Anforderung und der mit der Ausgabeposition assoziierte Zeitpunkt ermöglichen es Server DECS, den Ausspielfortschritt des Videos zu ermitteln und eine synchronisiertes, dem Ausspielfortschritt entsprechendes Angebot eines mindestens einen Zusatzinhalts bereitzustellen. Der VoD Server 702 aktualisiert die aktuelle Information, insbesondere beispielsweise dann, wenn die Set Top Box G1 die Bereitstellung des Video auf Anforderung unterbricht oder verändert.

Mit Verfügbarkeit der aktuellen Information, welcher Audio/Video-Inhalt dem Nutzer bereitgestellt wird, sendet der Server DECS dem Lap-top G2 Angebote für dynamischen Zusatzinhalt, welche in direkter Beziehung stehen zu dem Teil des Audio/Video-Inhalts, welcher der Set Top Box G1 aktuell bereitgestellt wird. Die Angebote für dynamischen Zusatzinhalt können insbesondere beispielsweise Links oder Verweisadressen umfassen. Jeder angebotene Zusatzinhalt ist durch eine Identifikation eindeutig bestimmt.

Mit Auswahl eines Zusatzinhalts durch den Nutzer sendet der Lap-top G2 eine vierte Anforderungsnachricht für den Zusatzinhalt an den Server WEB, welcher den Zusatzinhalt bereitstellt. Hierbei kann die Adresse des Servers WEB dem Lap-top G2 mit dem Angebot des dynamischen Zusatzinhalts als Link oder Verweisadresse zur Verfügung gestellt worden sein. Die vierte Anforderungsnachricht umfasst die Identifikation des angeforderten Zusatzinhalts und kann eine URL des Servers DECS enthalten. Insbesondere kann die vierte Anforderungsnachricht als http request mit der URL des Servers DECS als "Referrer" ausgestaltet sein. Hiermit ist es dem Server WEB möglich, Auswertungen auf Basis des Referrers zu machen, insbesondere Statistikfunktionen zu implementieren, wie beispielsweise eine Ermittlung einer Anzahl von Zugriffen auf den Server WEB, welche von dem Server DECS ausgelöst wurden. Auch ist es dem Server WEB auf Basis des Referrers möglich, den Server DECS zu informieren beispielsweise darüber, dass ein neuer Zusatzinhalt bereitsteht oder dass der mindestens eine Zusatzinhalt Z nicht verfügbar oder wieder verfügbar ist.

Der Zusatzinhalt wird durch den Nutzer über mindestens einen spezifischen Button einer am Lap-top G2 mit Hilfe des Browsers 750 zur Ausgabe gebrachten Mehrzahl von Buttons (Button Bar) angefordert. Die mit dem mindestens einen spezifischen Button verbundenen Funktionen des Lap-top G2 sorgen durch Benachrichtigungen des Servers DECS dafür, dass der Server DECS notwendige Steuerungs- insbesondere Trickplay-Funktionen von dem VoD Server 702 anfordert. Die Ausgabe des Zusatzinhalts erfolgt unter Erhalt der zur Ausgabe gebrachten Mehrzahl von Buttons (Button Bar). Ist der Zusatzinhalt ein Audio-/Video- Inhalt oder ein per Streaming bereitgestellter Inhalt, welcher eine eigene Plugin Player Steuerung besitzt, so werden die über diese Plugin Player Steuerung initiierten Aktionen, wie z. B. "Play Video" mit einem handler script oder API registriert. Dies ermöglicht eine geeignete, ereignisgetriebene Benachrichtigung des Servers DECS, woraufhin der Server DECS notwendige Steuerungs- insbesondere Trickplay-Funktionen von dem VoD Server 702 anfordert.

In Abhängigkeit von dem durch den Nutzer gewählten spezifischen Button oder dem über das Player Plugin generierten Ereignis, benachrichtigt der Lap-top G2 den Server DECS, woraufhin der Server DECS notwendige Steuerungsinsbesondere Trickplay-Funktionen von dem VoD Server 702 anfordert.

Insbesondere sendet der Server DECS dem VoD Server 702 eine erste Steuerungs- insbesondere Trickplay -Anforderung in Form einer sechsten Anforderungsnachricht. Diese instruiert den VoD Server 702, die Bereitstellung des Videos zu unterbrechen.

Empfängt der Server DECS von dem Lap-top G2 eine siebte Anforderungsnachricht, welche den Server DECS darüber informiert, dass kein Ausgabeerfordernis für den Zusatzinhalt mehr besteht, dann sendet der Server DECS eine zweite TrickPlay Anforderung an den VoD Server 702 in Form einer achten Anforderungsnachricht. Diese instruiert den VoD Server 702, die Bereitstellung des Videos durch Streaming wiederaufzunehmen. Daraufhin wird das Video ab der Unterbrechungsstelle der Set Top Box G1 weiter bereitgestellt.

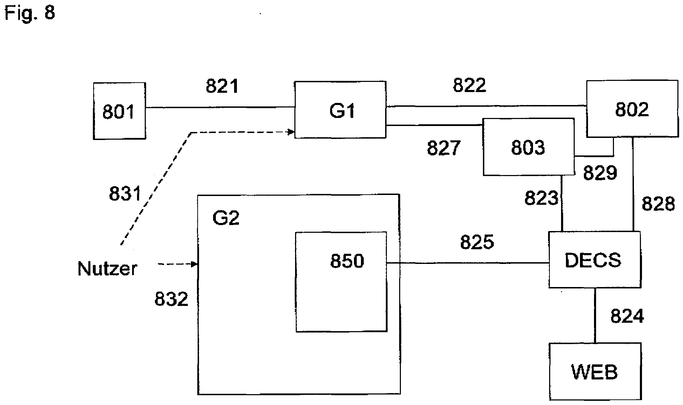

**Fig.8** zeigt eine vereinfachte Blockdarstellung eines Ausführungsbeispiels zur Veranschaulichung einer Bereitstellung eines Zusatzinhalts für einen von einem Live TV Server bereitgestellten Multimediainhalt. Ein Fernsehgerät 801 ist als audio-/ videotaugliche Ausgabeeinheit an eine Set Top Box G1 über eine Verbindung 821 angeschlossen. Die Verbindung 821 erfüllt beispielsweise die Anforderungen einer HDMI Schnittstelle. Zwischen der Set Top Box G1 und einem PVR Server 802 besteht eine Kommunikationsbeziehung 822. Zwischen der Set Top Box G1 und einem Live TV Server 803 besteht eine Kommunikationsbeziehung 827. Zwischen dem PVR Server 802 und dem Live TV Server 803 besteht eine Kommunikationsbeziehung 829. Zwischen dem PVR Server 802 und einem Server DECS, welcher einen Zusatzinhaltdienst für einen Lap-top G2 bereitstellt, besteht eine Kommunikationsbeziehung 828. Ebenfalls besteht eine Kommunikationsbeziehung 823 zwischen dem Live TV Server 803 und dem Server DECS. Zwischen dem Server DECS und dem Lap-top G2 besteht eine Kommunikationsbeziehung 825. Zwischen dem Server DECS und einem Server WEB, welcher mindestens einen Zusatzinhalt, beispielsweise einen Audio/Video-Inhalt oder einen reinen Audio-Inhalt, auf Anforderung bereitstellt, besteht eine Kommunikationsbeziehung 824. Der Lap-top G2 besitzt einen Browser 850, welcher ein Plugin besitzt zur Unterstützung einer Kommunikation mit dem Server DECS. Ein Nutzer hat über Eingaben steuernden Zugriff auf die Set Top Box G1, was durch den Pfeil 831 veranschaulicht wird, und steuernden Zugriff auf den Lap-top G2, was durch den Pfeil 832 veranschaulicht wird.

Nach Registrierung der Set Top Box G1 bei dem Live TV Server 802 wählt der Nutzer ein Live TV Programm aus und fordert dieses an, worauf die Set Top Box G1 eine erste Anforderungsnachricht an den Live TV Server 803 sendet. Hierauf stellt der Live TV Server 803 der Set Top Box G1 das Live TV Programm beispielsweise per Streaming mittels RTSP zur Verfügung. Zusätzlich kann der Live TV Server 803 den Server DECS davon informieren, dass dem Nutzer und/oder der Set Top Box G1 aktuell das Live TV Programm zur Verfügung gestellt wird. Dies kann über eine XML/ http basierte Nachricht erfolgen, welche eine Identifizierung des Live TV Programms sowie eine Identifizierung des Nutzers und/oder eine Identifizierung der Set Top Box G1 umfasst.

Der Nutzer registriert und authentifiziert den Lap-top G2 an dem Server DECS durch Eingabe von Nutzerkennung und Passwort, woraufhin der Lap-top G2 eine weitere Registrierungsnachricht an den Server DECS sendet. Nach erfolgter Registrierung und Authentifizierung des Lap-top G2 an dem Server DECS fordert der Nutzer einen Zusatzinhaltdienst an, woraufhin der Lap-top G2 eine zweite Anforderungsnachricht für den Zusatzinhaltdienst an den Server DECS schickt.

Der Server DECS überprüft, ob er bereits eine aktuelle Information darüber hat, welcher Audio/Video-Inhalt dem Nutzer bereitgestellt wird. Ist dies nicht der Fall, dann fordert der Server DECS die aktuelle Information mittels einer dritten Anforderungsnachricht von dem Live TV Server 803 an und erhält die aktuelle Information in Form einer dritten Quittungsnachricht.

Die aktuelle Information umfasst insbesondere eine Identifikation des Live TV Programms und eine Zeit. Hierbei kann die Zeit beispielsweise die Ortszeit sein, zu der das Programm begonnen wurde. Insbesondere der Zeitbezug ermöglicht es dem Server DECS, den Ausspielfortschritt eines deterministischen Live TV Programms zu ermitteln und ein synchronisiertes, dem Ausspielfortschritt entsprechendes Angebot eines mindestens einen Zusatzinhalts bereitzustellen. Der Live TV Server 803 aktualisiert die aktuelle Information, insbesondere beispielsweise dann, wenn die Set Top Box G1 die Bereitstellung des Live TV Programms abbricht und/oder zu einem anderen Live TV Programm wechselt. Ein deterministisches Live TV Programm kann ein Programm mit vorbestimmtem Ablauf sein, ein Sportereignis mit definierten Pausen, ebenso ein Konzert oder eine Opernaufführung, ein Spielfilm, ein Programm mit über eine elektronische Programminformation festgelegter Programmstruktur. Neben der Auswertung der Zeit und einer deterministischen Struktur des Live TV Programms kann eine synchrone, mit dem Live TV Programm schritthaltende Bereitstellung eines mindestens einen Zusatzinhalts auch durch Bilderkennung, Texterkennung und Spracherkennung oder eine Kombination der genannten Erkennungen erfolgen.

Mit Verfügbarkeit der aktuellen Information, welcher Audio/Video-Inhalt dem Nutzer bereitgestellt wird, sendet der Server DECS dem Lap-top G2 Angebote für dynamischen Zusatzinhalt, welche in direkter Beziehung stehen zu dem Teil des Audio/Video-Inhalts, welcher der Set Top Box G1 aktuell bereitgestellt wird. Die Angebote für dynamischen Zusatzinhalt können insbesondere beispielsweise Links oder Verweisadressen umfassen. Jeder angebotene Zusatzinhalt ist durch eine Identifikation eindeutig bestimmt.

Mit Auswahl eines Zusatzinhalts durch den Nutzer sendet der Lap-top G2 eine vierte Anforderungsnachricht für den Zusatzinhalt an den Server DECS. Die vierte Anforderungsnachricht umfasst die Identifikation des angeforderten Zusatzinhalts.

Falls der beispielsweise über einen Link oder eine Verweisadresse in der vierten Anforderungsnachricht identifizierte Zusatzinhalt von dem Server WEB bereitgestellt wird, dann sendet der Server DECS dem Server WEB mit Erhalt und nach Auswertung der vierten Anforderungsnachricht eine fünfte Anforderungsnachricht zur Bereitstellung des Zusatzinhalts. Hierbei kann der Server DECS ein WEB Dienst API des Servers WEB nutzen. Nach Erhalt des von dem Server WEB angeforderten Zusatzinhalts kann der Server DECS diesen zur Aufbereitung einer HTML Seite nutzen, welche dem Lap-top G2 bereitgestellt werden kann.

Sodann sendet der Server DECS dem PVR Server 802 eine erste Steuerungs- insbesondere Trickplay -Anforderung in Form einer sechsten Anforderungsnachricht. Diese instruiert den PVR Server 802, eine Aufzeichnung des Live TV Programms vorzunehmen. Zum Erhalt des Live TV Programms kann der PVR Server 802 die Kommunikationsbeziehung 829 nutzen. Zusätzlich kann der Server DECS optional die Bereitstellung des Live TV Programms für die Set Top Box G1 mittels einer weiteren Anforderungsnachricht an den Live TV Server 803 unterbinden. Weiters sendet der Server DECS dem Lap-top G2 den über die vierte Anforderungsnachricht angeforderten Zusatzinhalt. Der Zusatzinhalt kann hierbei beispielsweise auf dem Server DECS lokal gespeicherter Zusatzinhalt sein oder Zusatzinhalt, welchen der Server DECS auf Anforderung von dem Server WEB bereitgestellt bekommen hat. Der Zusatzinhalt kann insbesondere in Form einer HTML Seite bereitgestellt werden und mittels http zu dem Lap-top G2 übertragen werden. Ebenso kann der Zusatzinhalt abhängig von seinem Typ beispielsweise als MPEG- kodierter Inhalt über RTP oder RTSP von dem Server DECS zu dem Lap-top G2 übertragen werden.

Hat Server DECS den angeforderten Zusatzinhalt vollständig übertragen oder empfängt er von dem Lap-top G2 eine siebte Anforderungsnachricht, welche den Server DECS darüber informiert, dass kein Ausgabeerfordernis für den Zusatzinhalt mehr besteht, dann sendet der Server DECS eine zweite TrickPlay Anforderung an den PVR Server 802 in Form einer achten Anforderungsnachricht. Diese instruiert den PVR Server 802, die Bereitstellung des Live TV Programms durch Streaming des aufgezeichneten Inhalts fortzusetzen. Daraufhin wird das aufgezeichnete Live TV Programm zeitversetzt ab dem Beginn der Aufzeichnung der Set Top Box G1 bereitgestellt. Gleichzeitig wird das Live TV Programm weiterhin durch den PVR Server 802 aufgezeichnet.

Gemäß einer weiteren alternativen Ausführungsform kann der PVR Server integraler Bestandteil der Set Top Box G1 sein.

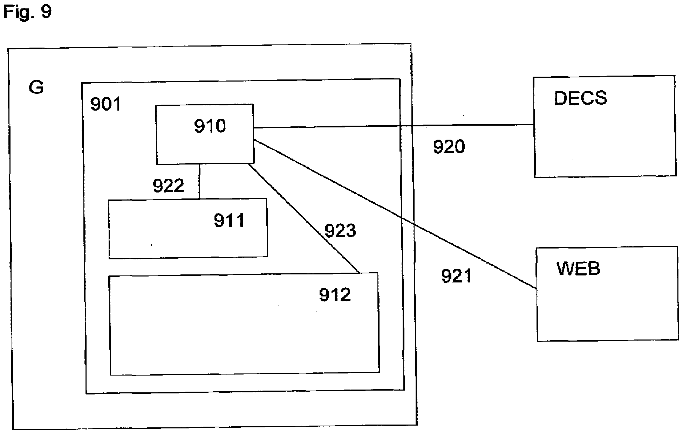

Fig.9 zeigt eine vereinfachte Blockdarstellung eines Ausführungsbeispiels zur Veranschaulichung einer Implementierung auf einem Endgerät G. Eine Client Applikation 901 eines Zusatzinhaltdienstes für Multimediainhalte besteht aus einer Logikeinheit 910, aus einer Nutzerschnittstelle 911 sowie einem Präsentationsfeld 912. Die Client Applikation 901 kann insbesondere eine Browser, eine Java oder eine Native Applikation sein.

Die Logikeinheit 910 besitzt eine Kommunikationsbeziehung 922 zu der Nutzerschnittstelle 911, eine Kommunikationsbeziehung 923 zu dem Präsentationsfeld 912, ferner eine Kommunikationsbeziehung 920 zu einem Server DECS, welcher den Zusatzinhaltdienst für das Endgerät G, insbesondere einen PC oder Lap-top bereitstellt, sowie eine Kommunikationsbeziehung 921 zu einem Server WEB, welcher einen mindestens einen Zusatzinhalt, beispielsweise einen Audio/Video-Inhalt oder einen reinen Audio-Inhalt, auf Anforderung bereitstellt. Die Logikeinheit 910 verarbeitet Anforderungen für Zusatzinhalte, steuert Plugin Applikationen zur Präsentation von Zusatzinhalten, sendet Nachrichten an den Server DECS, empfängt Nachrichten von dem Server DECS, aktualisiert die Nutzerschnittstelle 911 hinsichtlich möglicher Folgeeingaben des Nutzers und erfasst optional Statistikdaten beispielsweise des Nutzerverhaltens zur Bereitstellung für den Server DECS. Die Logikeinheit 910 dient der Anforderung des mindestens einen Zusatzinhalts und der Information des Servers DECS über zu veranlassende Steuerungs- insbesondere Trickplay- Anforderungen. Funktionen können insbesondere sein get/start Zusatzinhalt, close/stop Zusatzinhalt, start/pause/resume/record/stop A/V playback. Hierbei werden die voran stehend genannten Funktionen zur Ansteuerung des mindestens einen Zusatzinhalts und zur Ansteuerung des Playback aus Nutzersicht vorteilhaft über einen einzigen Button der Nutzerschnittstelle 911 ausgelöst.

Die Nutzerschnittstelle 911 kann in Form eines Anforderungs-Button ausgeführt sein, welcher bei Aktivierung ein AJAX Script der Logikeinheit 910 zum Ablauf bringt zum Laden des mindestens einen Zusatzinhalts von dem Server WEB in das Präsentationsfeld 912 und zur Bereitstellung einer Nachricht an den Server DECS, aufgrund welcher der Server DECS einen VoD Server ansteuert zum Stopp einer Bereitstellung eines Video auf Anforderung. Die Nutzerschnittstelle 911 stellt ferner einen Fortsetzungs-Button zur Verfügung, welchen der Nutzer bei erschöpftem Interesse an dem mindestens einen Zusatzinhalt aktivieren kann, woraufhin eine Nachricht an den Server DECS gesendet wird, aufgrund der der Server DECS den VoD Server ansteuert zur Fortsetzung einer Bereitstellung des Videos auf Anforderung. Startet der Nutzer einen von dem Server WEB zur Verfügung gestellten Zusatzinhalt in dem Präsentationsfeld 912, so wird ein Ausspielereignis eines eingebetteten Flashplayers mittels eines Javascripts der Logikeinheit 910 verarbeitet und eine Nachricht zur Generierung einer Steuerungs- insbesondere Trickplay-Anforderung an den Server DECS gesendet.

Das Präsentationsfeld 912 kann mit fester oder sich dynamisch ändernder Größe ausgeführt sein.

### Abkürzungsliste

- AJAX: Asynchronous JavaScript and XML
- API: Application Program Interface
- DSL: Digital Subscriber Line
- DSLAM: Digital Subscriber Line Access Multiplexer
- DTV: Digital Television
- DVB: Digital Video Broadcasting
- EPG: Electronic Program Guide
- ESG: Electronic Service Guide
- FTP: File Transfer Protocol
- HD: High Definition
- HDMI: High Definition Multimedia Interface
- HDTV: High Definition Television
- HTML: Hypertext Markup Language
- HTTP: Hypertext Transfer Protocol
- HTTPS: Hypertext Transfer Protocol Secure
- IGMP: Internet Group Management Protocol
- IMSI: International Mobile Subscriber Identity
- IP: Internet Protocol
- IPTV: Internet Protocol Television
- ISDN: Integrated Services Digital Network
- MAC: Media Access Control
- MBMS: Multimedia Broadcast Multicast Service
- MPEG: Moving Picture Experts Group
- MSISDN: Mobile Subscriber ISDN Number
- OMA: Open Mobile Alliance
- PC: Personal Computer
- PDA: Personal Digital Assitant
- PIN: Persönliche Identifikationsnummer
- PVR: Personal Video Recorder
- RTP: Real-Time Transport Protocol
- RTSP: Real-Time Streaming Protocol
- SD: Standard Definition
- SDTV: Standard Definition Television
- SOAP: Simple Object Access Protocol
- STB: Set Top Box
- TCP: Transmission Control Protocol
- TFTP: Trivial File Transfer Protocol
- TV: Television, Fernsehen, Fernsehgerät
- UDP: User Datagram Protocol
- URL: Uniform Resource Locator
- VoD: Video on Demand
- XML: Extensible Markup Language

## Patentansprüche

1. Verfahren zum Zugriff auf Zusatzinhalte für Multimediainhalte,
- bei dem ein Beginn einer Ausgabe eines Multimediainhalts (C) erkannt wird (101);
- bei dem der Multimediainhalt (C), eine erste Ausgabeposition des Multimediainhalts (C) und eine Art der Ausgabe des Multimediainhalts (C) ermittelt werden (102);
- bei dem in Abhängigkeit von dem Multimediainhalt (C), der ersten Ausgabeposition des Multimediainhalts (C) und der Art der Ausgabe des Multimediainhalts (C) ein Angebot eines mindestens einen Zusatzinhalts (Z) bereitgestellt wird (103);
- bei dem eine Anforderung des mindestens einen Zusatzinhalts (Z) erkannt wird (104);
- bei dem der mindestens eine Zusatzinhalt (Z) aufgrund der Anforderung des mindestens einen Zusatzinhalts (Z) bereitgestellt wird (105), wobei einem Nutzer gleichzeitig der Multimediainhalt (C) durch ein erstes Endgerät (G1) und der mindestens eine Zusatzinhalt (Z) durch ein zweites Endgerät (G2) ausgegeben werden;
- bei dem in Abhängigkeit von der Anforderung des mindestens einen Zusatzinhalts (Z) eine zweite Ausgabeposition des Multimediainhalts (C) ermittelt wird (106); und
- bei dem eine Aufzeichnung des Multimediainhalts (C) ab der zweiten Ausgabeposition des Multimediainhalts (C) angefordert wird, wobei die Aufzeichnung des Multimediainhalts (C) in Abhängigkeit von dem Multimediainhalt (C) und/oder dem Zusatzinhalt (Z) angefordert wird.

2. Verfahren nach Anspruch 1,
wobei eine Zeit und/oder ein Ort erfasst werden (102) und wobei das Angebot des mindestens einen Zusatzinhalts (Z) in Abhängigkeit von der erfassten Zeit und/oder dem erfassten Ort bereitgestellt wird (103).

3. Verfahren nach Anspruch 1 oder 2,
- bei dem eine Speicherung der zweiten Ausgabeposition des Multimediainhalts (C) durchgeführt wird.

4. Verfahren nach einem der vorstehenden Ansprüche,
- bei dem angefordert wird, dass ab der zweiten Ausgabeposition eine Tonausgabe des Multimediainhalts (C) hinsichtlich der Lautstärke verändert wird oder stumm geschaltet wird.

5. Verfahren nach einem der vorstehenden Ansprüche,
wobei der mindestens eine Zusatzinhalt (Z) von dem ersten Endgerät (G1) oder von dem zweiten Endgerät (G2) angefordert wird.

6. Verfahren nach einem der vorstehenden Ansprüche,
wobei der mindestens eine Zusatzinhalt (Z) auch für das erste Endgerät (G1) bereitgestellt wird.

7. Verfahren nach einem der vorstehenden Ansprüche,
wobei die zweite Ausgabeposition des Multimediainhalts (C) assoziiert ist mit der Zeit, zu welcher der mindestens eine Zusatzinhalt (Z) bereitgestellt wird.

8. Verfahren nach einem der vorstehenden Ansprüche,
- bei dem eine Modifikation der Ausgabe des Multimediainhalts (C) ab der zweiten Ausgabeposition angefordert wird.

9. Verfahren nach einem der vorstehenden Ansprüche,
- bei dem eine Ausgabe des Multimediainhalts (C) ab der zweiten Ausgabeposition angefordert wird, falls erkannt wird, dass der mindestens eine Zusatzinhalt (Z) nicht mehr bereitgestellt wird oder eine Ausgabe des mindestens einen Zusatzinhalts (Z) nicht mehr erforderlich ist (107, 108).

10. Verfahren nach einem der vorstehenden Ansprüche,
wobei das Angebot des mindestens einen Zusatzinhalts (Z) von einem Anbieter des Multimediainhalts (DECS) bereitgestellt wird, und
wobei der mindestens eine Zusatzinhalt (Z) von einem unabhängigen weiteren Anbieter von Zusatzinhalten (WEB) bereitgestellt wird.

11. Verfahren nach einem der vorstehenden Ansprüche,
- bei dem eine statistische Bewertung der Anforderung des mindestens einen Zusatzinhalts (Z) und/oder einer Ausgabedauer des mindestens einen Zusatzinhalts (Z) durchgeführt wird.

12. Verfahren nach einem der vorstehenden Ansprüche,
- bei dem eine Identifizierung eines weiteren Zusatzinhalts erkannt wird;
- bei dem mindestens eine dritte Ausgabeposition des Multimediainhalts (C) für den weiteren Zusatzinhalt ermittelt wird; und
- bei dem der weitere Zusatzinhalt in ein zukünftiges Angebot eines mindestens einen Zusatzinhalts für den Multimediainhalt (C) aufgenommen wird.

13. Vorrichtung zum Zugriff auf Zusatzinhalte für Multimediainhalte mit
- einer ersten Einheit (503), die
einen Beginn einer Ausgabe eines Multimediainhalts (C) erkennt und die
den Multimediainhalt (C), eine erste Ausgabeposition des Multimediainhalts (C) und eine Art der Ausgabe des Multimediainhalts (C) ermittelt;
- einer zweiten Einheit (504), die
ein Angebot eines mindestens einen Zusatzinhalts (Z) in Abhängigkeit von dem Multimediainhalt (C), der ersten Ausgabeposition des Multimediainhalts (C) und der Art der Ausgabe des Multimediainhalts (C) bereitstellt und die eine Anforderung des mindestens einen Zusatzinhalts (Z) erkennt, wobei einem Nutzer gleichzeitig der Multimediainhalt (C) durch ein erstes Endgerät (G1) und der mindestens eine Zusatzinhalt (Z) durch ein zweites Endgerät (G2) ausgegeben werden;
- einer dritten Einheit (505), die
in Abhängigkeit von der Anforderung des mindestens einen Zusatzinhalts (Z) eine zweite Ausgabeposition des Multimediainhalts (C) ermittelt, wobei die dritte Einheit (505) eine Aufzeichnung des Multimediainhalts (C) ab der zweiten Ausgabeposition des Multimediainhalts (C) anfordert, wobei die Aufzeichnung des Multimediainhalts (C) in Abhängigkeit von dem Multimediainhalt (C) und/oder dem Zusatzinhalt (Z) angefordert wird.

14. Vorrichtung nach Anspruch 13,
wobei die dritte Einheit (505) den mindestens einen Zusatzinhalt (Z) aufgrund der Anforderung des mindestens einen Zusatzinhalts (Z) bereitstellt oder anfordert.

15. Vorrichtung nach Anspruch 13 oder 14,
wobei die dritte Einheit (505) eine Speicherung der zweiten Ausgabeposition des Multimediainhalts (C) durchführt.

16. Vorrichtung nach einem der Ansprüche 13 bis 15,
wobei die dritte Einheit (505) eine Modifikation der Ausgabe des Multimediainhalts (C) ab der zweiten Ausgabeposition anfordert.

17. Vorrichtung nach einem der Ansprüche 13 bis 16,
wobei die dritte Einheit (505) eine Ausgabe des Multimediainhalts (C) ab der zweiten Ausgabeposition anfordert, falls erkannt wird, dass der mindestens eine Zusatzinhalt (Z) nicht mehr bereitgestellt wird oder eine Ausgabe des mindestens einen Zusatzinhalts (Z) nicht mehr erforderlich ist.

18. Vorrichtung nach einem der Ansprüche 13 bis 17,
- mit einer vierten Einheit (506), die
eine statistische Bewertung der Anforderung des mindestens einen Zusatzinhalts (Z) und/oder einer Ausgabedauer des mindestens einen Zusatzinhalts (Z) durchführt.

19. Vorrichtung nach einem der Ansprüche 13 bis 18,
- mit einer fünften Einheit (507), die
eine Identifizierung eines weiteren Zusatzinhalts erkennt,
mindestens eine dritte Ausgabeposition des Multimediainhalts (C) für den weiteren Zusatzinhalt ermittelt und
den weiteren Zusatzinhalt in ein zukünftiges Angebot eines mindestens einen Zusatzinhalts für den Multimediainhalt (C) aufnimmt.

20. Vorrichtung nach einem der Ansprüche 13 bis 19,
wobei das Angebot des mindestens einen Zusatzinhalts (Z) von einem Anbieter des Multimediainhalts (DECS) bereitgestellt wird, und
wobei der mindestens eine Zusatzinhalt (Z) von einem unabhängigen weiteren Anbieter von Zusatzinhalten (WEB) bereitgestellt wird.

## Claims

1. Method for accessing supplementary content for multimedia content,
- in which a beginning of an output of a multimedia content (C) is detected (101);
- in which the multimedia content (C), a first output position of the multimedia content (C) and a type of the output of the multimedia content (C) are ascertained (102);
- in which the multimedia content (C), the first output position of the multimedia content (C) and the type of the output of the multimedia content (C) are taken as a basis for providing (103) an offer of at least one supplementary content (Z);
- in which a request for the at least one supplementary content (Z) is detected (104);
- in which the at least one supplementary content (Z) is provided (105) on the basis of the request for the at least one supplementary content (Z), a user simultaneously having the multimedia content (C) output to him by a first terminal (G1) and having the at least one supplementary content (Z) output to him by a second terminal (G2);
- in which the request for the at least one supplementary content (Z) is taken as a basis for ascertaining (106) a second output position of the multimedia content (C); and
- in which a recording of the multimedia content (C) from the second output position of the multimedia content (C) onwards is requested, the recording of the multimedia content (C) being requested on the basis of the multimedia content (C) and/or the supplementary content (Z).

2. Method according to Claim 1,
wherein a time and/or a location are captured (102) and wherein the offer of the at least one supplementary content (Z) is provided (103) on the basis of the captured time and/or the captured location.

3. Method according to Claim 1 or 2,
- in which storage of the second output position of the multimedia content (C) is performed.

4. Method according to one of the preceding claims,
- in which it is requested that an audio output of the multimedia content (C) is altered in terms of volume or is muted from the second output position onwards.

5. Method according to one of the preceding claims,
wherein the at least one supplementary content (Z) is requested by the first terminal (G1) or by the second terminal (G2).

6. Method according to one of the preceding claims,
wherein the at least one supplementary content (Z) is also provided for the first terminal (G1).

7. Method according to one of the preceding claims,
wherein the second output position of the multimedia content (C) is associated with the time at which the at least one supplementary content (Z) is provided.

8. Method according to one of the preceding claims,
- in which a modification of the output of the multimedia content (C) is requested from the second output position onwards.

9. Method according to one of the preceding claims,
- in which an output of the multimedia content (C) is requested from the second output position onwards if it is detected that the at least one supplementary content (Z) is no longer provided or an output of the at least one supplementary content (Z) is no longer required (107, 108).

10. Method according to one of the preceding claims,
wherein the offer of the at least one supplementary content (Z) is provided by a provider of the multimedia content (DECS) and,
wherein the at least one supplementary content (Z) is provided by an independent further provider of supplementary content (WEB).

11. Method according to one of the preceding claims,
- in which a statistical rating of the request for the at least one supplementary content (Z) and/or of an output period for the at least one supplementary content (Z) is performed.

12. Method according to one of the preceding claims,
- in which an identification of a further supplementary content is detected;
- in which at least one third output position of the multimedia content (C) is ascertained for the further supplementary content; and
- in which the further supplementary content is included in a future offer of at least one supplementary content for the multimedia content (C).

13. Apparatus for accessing supplementary content for multimedia content, having
- a first unit (503), which
detects a beginning of an output of a multimedia content (C) and which
ascertains the multimedia content (C), a first output position of the multimedia content (C) and a type of the output of the multimedia content (C);
- a second unit (504), which
provides an offer of at least one supplementary content (Z) on the basis of the multimedia content (C), the first output position of the multimedia content (C) and the type of the output of the multimedia content (C) and which detects a request for the at least one supplementary content (Z), a user simultaneously having the multimedia content (C) output to him by a first terminal (G1) and having the at least one supplementary content (Z) output to him by a second terminal (G2);
- a third unit (505), which
takes the request for the at least one supplementary content (Z) as a basis for ascertaining a second output position of the multimedia content (C), the third unit (505) requesting a recording of the multimedia content (C) from the second output position of the multimedia content (C) onwards, the recording of the multimedia content (C) being requested on the basis of the multimedia content (C) and/or the supplementary content (Z).

14. Apparatus according to Claim 13,
wherein the third unit (505) provides or requests the at least one supplementary content (Z) on the basis of the request for the at least one supplementary content (Z).

15. Apparatus according to Claim 13 or 14,
wherein the third unit (505) performs storage of the second output position of the multimedia content (C).

16. Apparatus according to one of Claims 13 to 15,
wherein the third unit (505) requests a modification of the output of the multimedia content (C) from the second output position onwards.

17. Apparatus according to one of Claims 13 to 16,
wherein the third unit (505) requests an output of the multimedia content (C) from the second output position onwards if it is detected that the at least one supplementary content (Z) is no longer provided or an output of the at least one supplementary content (Z) is no longer required.

18. Apparatus according to one of Claims 13 to 17,
- having a fourth unit (506), which
performs a statistical rating of the request for the at least one supplementary content (Z) and/or of an output period for the at least one supplementary content (Z).

19. Apparatus according to one of Claims 13 to 18,
- having a fifth unit (507), which
detects an identification of a further supplementary content,
ascertains at least one third output position of the multimedia content (C) for the further supplementary content, and
includes the further supplementary content in a future offer of at least one supplementary content for the multimedia content (C).

20. Apparatus according to one of Claims 13 to 19,
wherein the offer of the at least one supplementary content (Z) is provided by a provider of the multimedia content (DECS), and
wherein the at least one supplementary content (Z) is provided by an independent further provider of supplementary content (WEB).

## Revendications

1. Procédé d'accès à du contenus supplémentaires pour contenus multimédias, dans lequel :
- un début d'une émission d'un contenu multimédia (C) est reconnu (101) ;
- le contenu multimédia (C), une première position d'émission du contenu multimédia (C) et un type de l'émission du contenu multimédia (C) sont déterminés (102) ;
- en fonction du contenu multimédia (C), de la première position d'émission du contenu multimédia (C) et du type de l'émission du contenu multimédia (C), une offre d'au moins un contenu supplémentaire (Z) est fournie (103) ;
- une requête pour l'au moins un contenu supplémentaire (Z) est reconnue (104) ;
- l'au moins un contenu supplémentaire (Z) est fourni sur la base de la requête pour au moins un contenu supplémentaire (Z) (105), le contenu multimédia (C) et l'au moins un contenu supplémentaire (Z) étant émis en même temps pour un utilisateur, le premier par un premier terminal (G1) et le second, par un deuxième terminal (G2) ;
- en fonction de la requête pour au moins un contenu supplémentaire (Z), une deuxième position d'émission du contenu multimédia (C) est déterminée (106) ; et
- un enregistrement du contenu multimédia (C) est demandé à partir de la deuxième position d'émission du contenu multimédia (C), l'enregistrement du contenu multimédia (C) étant demandé en fonction du contenu multimédia (C) et/ou du contenu supplémentaire (Z).

2. Procédé selon la revendication 1, une heure et/ou un lieu étant détectés (102) et l'offre de l'au moins un contenu supplémentaire (Z) étant fournie (103) en fonction de l'heure et/ou du lieu détectés (103).

3. Procédé selon la revendication 1 ou 2, dans lequel une sauvegarde de la deuxième position d'émission du contenu multimédia (C) est effectuée.

4. Procédé selon l'une des revendications précédentes, dans lequel il est demandé qu'à partir de la deuxième position d'émission une émission sonore du contenu multimédia (C) soit modifiée quant au volume sonore ou que le son soit coupé.

5. Procédé selon l'une des revendications précédentes, l'au moins un contenu supplémentaire (Z) étant demandé par le premier terminal (G1) ou par le deuxième terminal (G2).

6. Procédé selon l'une des revendications précédentes, l'au moins un contenu supplémentaire (Z) étant également fourni pour le premier terminal (G1).

7. Procédé selon l'une des revendications précédentes, la deuxième position d'émission du contenu multimédia (C) étant associée à l'heure à laquelle l'au moins un contenu supplémentaire (Z) est fourni.

8. Procédé selon l'une des revendications précédentes, dans lequel une modification de l'émission du contenu multimédia (C) est demandée à partir de la deuxième position d'émission.

9. Procédé selon l'une des revendications précédentes, dans lequel une émission du contenu multimédia (C) est demandée à partir de la deuxième position d'émission s'il est reconnu que l'au moins un contenu supplémentaire (Z) n'est plus fourni ou qu'une émission de l'au moins un contenu supplémentaire (Z) n'est plus nécessaire (107, 108).

10. Procédé selon l'une des revendications précédentes, l'offre de l'au moins un contenu supplémentaire (Z) étant fournie par un fournisseur du contenu multimédia (DECS) et l'au moins un contenu supplémentaire (Z) étant fourni par un autre fournisseur indépendant de contenus supplémentaires (WEB).

11. Procédé selon l'une des revendications précédentes, dans lequel est effectuée une évaluation statistique de la requête pour au moins un contenu supplémentaire (Z) et/ou d'une durée d'émission de l'au moins un contenu supplémentaire (Z).

12. Procédé selon l'une des revendications précédentes, dans lequel :
- une identification d'un autre contenu supplémentaire est reconnue ;
- au moins une troisième position d'émission du contenu multimédia (C) est déterminée pour l'autre contenu supplémentaire ; et
- l'autre contenu supplémentaire est repris dans une offre future d'au moins un contenu supplémentaire pour le contenu multimédia (C).

13. Dispositif d'accès à des contenus supplémentaires pour des contenus multimédias, comportant :
- une première unité (503) qui reconnaît un début d'une émission d'un contenu multimédia (C) et qui détermine le contenu multimédia (C), une première position d'émission du contenu multimédia (C) et un type de l'émission du contenu multimédia (C) ;
- une deuxième unité (504) qui fournit une offre d'au moins un contenu supplémentaire (Z) en fonction du contenu multimédia (C), de la première position d'émission du contenu multimédia (C) et du type de l'émission du contenu multimédia (C) et qui reconnaît une requête pour au moins un contenu supplémentaire (Z), le contenu multimédia (C) et l'au moins un contenu supplémentaire (Z) étant émis en même temps pour un utilisateur, le premier par un premier terminal (G1) et le second, par un deuxième terminal (G2) ;
- une troisième unité (505) qui détermine une deuxième position d'émission du contenu multimédia (C) en fonction de la requête pour au moins un contenu supplémentaire (Z), la troisième unité (505) demandant un enregistrement du contenu multimédia (C) à partir de la deuxième position d'émission du contenu multimédia (C), l'enregistrement du contenu multimédia (C) étant demandé en fonction du contenu multimédia (C) et/ou du contenu supplémentaire (Z).

14. Dispositif selon la revendication 13, la troisième unité (505) fournissant ou demandant l'au moins un contenu supplémentaire (Z) sur la base de la requête pour au moins un contenu supplémentaire (Z).

15. Dispositif selon la revendication 13 ou 14, la troisième unité (505) effectuant une sauvegarde de la deuxième position d'émission du contenu multimédia (C).

16. Dispositif selon l'une des revendications 13 à 15, la troisième unité (505) demandant une modification de l'émission du contenu multimédia (C) à partir de la deuxième position d'émission.

17. Dispositif selon l'une des revendications 13 à 16, la troisième unité (505) demandant une émission du contenu multimédia (C) à partir de la deuxième position d'émission s'il est reconnu que l'au moins un contenu supplémentaire (Z) n'est plus fourni ou qu'une émission de l'au moins un contenu supplémentaire (Z) n'est plus nécessaire.

18. Dispositif selon l'une des revendications 13 à 17, comportant une quatrième unité (506) qui effectue une évaluation statistique de la requête pour au moins un contenu supplémentaire (Z) et/ou d'une durée d'émission de l'au moins un contenu supplémentaire (Z).

19. Dispositif selon l'une des revendications 13 à 18, comportant une cinquième unité (507) qui reconnaît une identification d'un autre contenu supplémentaire, détermine au moins une troisième position d'émission du contenu multimédia (C) pour l'autre contenu supplémentaire et reprend l'autre contenu supplémentaire dans une offre future d'au moins un contenu supplémentaire pour le contenu multimédia (C).

20. Dispositif selon l'une des revendications 13 à 19, l'offre de l'au moins un contenu supplémentaire (Z) étant fournie par un fournisseur du contenu multimédia (DECS) et l'au moins un contenu supplémentaire (Z) étant fourni par un autre fournisseur indépendant de contenus supplémentaires (WEB).
